# EUROPEAN PATENT APPLICATION

(11) **EP 4 525 157 A1**
(43) Date of publication of application: **19.03.2025**
(21) Application number: 22969835.2
(22) Date of filing: 30.12.2022
(51) Int. Cl.: H01M 50/242, H01M 50/249, B60K 1/04

(54) **HOUSING, HOUSING ASSEMBLY, BATTERY, AND ELECTRICAL DEVICE**

(71) Applicant: Contemporary Amperex Technology (Hong Kong) Limited, Hong Kong (HK)
(72) Inventor: SHI, Weigang, Ningde City, Fujian 352100 (CN); LUO, Wenchao, Ningde City, Fujian 352100 (CN); WANG, Zhi, Ningde City, Fujian 352100 (CN); ZHANG, Kangjun, Ningde City, Fujian 352100 (CN)
(74) Representative: Kraus & Lederer PartGmbB
(86) International application number: PCT/CN2022/144188
(87) International publication number: WO 2024/138693

(57) **Abstract**

This application provides a box, a box assembly, a battery, and electric device, relating to the field of battery technologies. The box includes a box body and a mounting structure. The box body is provided with an opening and an end wall arranged oppositely. The mounting structure is arranged on the end wall, and when viewed in the thickness direction of the end wall, the mounting structure overlaps with the end wall, and the mounting structure is configured to connect the box body and a device. The mounting structure is arranged on the end wall of the box, which can reduce the size of the part of the mounting structure extending to a side direction of the box body or prevent the mounting structure from extending to the side direction of the box body, thereby reducing the external space occupied by the mounting structure along the side direction of the box body or avoiding the mounting structure occupying the external space along the side direction of the box body. Thus, the size of the internal space of the box body along the side direction of the box body can be increased so that the space originally occupied by the mounting structure along the side direction of the box body can be used for accommodating battery cells, which is conducive to increasing the energy density and pack assembly efficiency of batteries equipped with such box.

## Description

### TECHNICAL FIELD

This application relates to the field of battery technologies, and in particular to a box, a box assembly, a battery, and an electric device.

### BACKGROUND

At present, batteries most commonly used in vehicles are lithium-ion batteries. As rechargeable batteries, lithium-ion batteries have the advantages of high energy density, high power density, long cycle life, long storage time, and so on.

A battery typically includes a box and a battery cell, where the battery cell is accommodated in the box. Boxes with a larger volume are more conducive to increasing the energy density of batteries. However, boxes with a too large volume seriously restrict the pack assembly efficiency of batteries. Therefore, how the pack assembly efficiency of batteries is improved has become an urgent problem in the field of battery technologies.

### SUMMARY

Embodiments of this application provide a box, a box assembly, a battery, and an electric device to improve the pack assembly efficiency of batteries.

According to a first aspect, an embodiment of this application provides a box including a box body and a mounting structure; where the box body is provided with an opening and an end wall oppositely arranged; and the mounting structure is arranged on the end wall, and when viewed in a thickness direction of the end wall, the mounting structure overlaps with the end wall, and the mounting structure is configured to connect the box body and a device.

In the above technical solution, the mounting structure is arranged on the end wall of the box, which can reduce the size of the part of the mounting structure extending to a side direction of the box body or prevent the mounting structure from extending to the side direction of the box body, thereby reducing the external space occupied by the mounting structure along the side direction of the box body or avoiding the mounting structure occupying the external space along the side direction of the box body. Thus, the size of the internal space of the box body along the side direction of the box body can be increased so that the space originally occupied by the mounting structure along the side direction of the box body can be used for accommodating battery cells, which is conducive to increasing the energy density and pack assembly efficiency of batteries equipped with such box.

In some embodiments of the first aspect of this application, the mounting structure includes a mounting hole.

In the above technical solution, the mounting member is a mounting hole arranged in the end wall, which is conducive to simplifying the structure and reducing the weight of the box.

In some embodiments of the first aspect of this application, the mounting hole is provided with internal threads.

In the above technical solution, the mounting hole is provided with internal threads, so that the device can threadedly engage with the mounting hole, thereby realizing the connection between the box body and the device. This connection method is simple and convenient and provides good stability.

In some embodiments of the first aspect of this application, the mounting hole is a blind hole.

In the above technical solution, the mounting hole is a blind hole, which means that the mounting hole does not penetrate through the end wall, thereby reducing the impact of arrangement of the mounting hole on the structural strength of the end wall. In addition, there is no need to seal the mounting hole, which reduces the manufacturing difficulty of the box.

In some embodiments of the first aspect of this application, the box includes a mounting member installed on the end wall, where the mounting structure is arranged on the mounting member.

In the above technical solution, the mounting structure is arranged on the mounting member installed on the end wall, and the box body and the device can be connected through the mounting member, which makes the connection between the box body and the device easier.

In some embodiments of the first aspect of this application, the mounting member is welded to the end wall.

In the technical solution, the mounting member and the end wall are welded, which not only makes the connection easy, but also enables the connection between the mounting member and the end wall to be stronger and provide greater load-bearing capacity.

In some embodiments of the first aspect of this application, a first weld seam is formed between the mounting member and the end wall, and the first weld seam is located on an outer side face of the end wall.

In the above technical solution, the first weld seam is located on the outer side face of the end wall, and the end wall and the mounting member can be welded on the outer side of the end wall, which makes the welding between the end wall and the mounting member more convenient.

In some embodiments of the first aspect of this application, a second weld seam is formed between the mounting member and the end wall, and the second weld seam is located on an inner side face of the end wall.

In the technical solution, the mounting member and the end wall are welded to form the second weld seam on the inner side of the end wall, and the mounting member and the end wall are welded to form the second weld seam on the outer side of the end wall, so there are two welding positions between the end wall and the mounting member, which further enhances the connection strength between the end wall and the mounting member.

In some embodiments of the first aspect of this application, the mounting member is at least partially embedded in the end wall.

In the technical solution, the mounting member is at least partially embedded in the end wall, so that the mounting member and the end wall share space in the thickness direction of the end wall, which reduces or avoids the external space of the box body occupied by the mounting member, thereby reducing the overall structural size of the box; and the mounting member is at least partially embedded in the end wall, which can increase the combined area between the mounting member and the end wall, thereby enhancing the connection stability between the end wall and the mounting member.

In some embodiments of the first aspect of this application, one end of the mounting member is flush with the outer surface of the end wall; and/or one end of the mounting member protrudes from the outer surface of the end wall.

In the technical solution, one end of the mounting member is flush with the outer surface of the end wall, which can avoid the mounting member exceeding the outer surface of the end wall to occupy the external space of the end wall, thereby further reducing the volume of the box. One end of the mounting member protrudes from the outer surface of the end wall, making it convenient for the mounting member to engage with the device to connect the box body and the device.

In some embodiments of the first aspect of this application, the box further includes a partition beam, where the partition beam is located in the box body and arranged on the end wall, and when viewed in the thickness direction of the end wall, the mounting structure overlaps with the partition beam.

In the above technical solution, the partition beam is arranged in the box body and on the end wall, and when viewed in the thickness direction of the end wall, the mounting structure overlaps with the partition beam, so that the partition beam can enhance the structural strength of a region of the end wall corresponding to the mounting structure, which reduces the risk of damage of the end wall due to overload.

In some embodiments of the first aspect of this application, the mounting structure includes a mounting member installed on the end wall, where one part of the mounting member is embedded in the end wall, and another part of the mounting member is connected to the partition beam.

In the above technical solution, one part of the mounting member is embedded in the end wall, and another part of the mounting member is connected to the partition beam, so that the end wall and the mounting member share space, which reduces the external space of the box body occupied by the mounting member or avoids the mounting member occupying the external space of the box body, thereby reducing the overall structural size of the box. The mounting member is connected to the end wall and the partition beam, and when the mounting member connects the box body to the device, the end wall and the partition beam can jointly bear the weight of the box body and its internal structure, which reduces the risk of fatigue damage of the end wall.

In some embodiments of the first aspect of this application, the mounting member is welded to the partition beam.

In the technical solution, the mounting member and the partition beam are welded, which not only makes the connection easy, but also enables the connection between the mounting member and the partition beam to be stronger and provide greater load-bearing capacity.

In some embodiments of the first aspect of this application, a third weld seam is formed between the mounting member and the partition beam, and the third weld seam is located on a side of the partition beam facing away from the end wall.

In the above technical solution, the third weld seam formed by welding the mounting member and the partition beam is located on the side of the partition beam facing away from the end wall, so that the welding of the mounting member and the partition beam can be carried out on the side of the partition beam facing away from the end wall, which makes the welding of the mounting member and the partition beam more convenient.

In some embodiments of the first aspect of this application, the mounting member is a sleeve, and the sleeve is provided with internal threads.

In the above technical solution, the mounting member is a sleeve, and the sleeve is provided with internal threads, so that the mounting member threadedly engages with the device to mount the box on the electric device. Such mounting method is simple and convenient, and provides good stability.

In some embodiments of the first aspect of this application, a protective structure is provided on the outer side of the end wall, and the protective structure is configured to provide cushioning and/or insulation for the end wall.

In the above technical solution, the arrangement of the protective structure can improve the impact resistance of the end wall and/or help to maintain a substantially constant ambient temperature inside the box.

In some embodiments of the first aspect of this application, the mounting structure protrudes from the protective structure.

In the technical solution, the mounting structure protrudes from the protective structure, which facilitates the engagement between the mounting structure and the device and reduces the risk of interference between the connecting position of the mounting structure and the device and the protective structure.

In some embodiments of the first aspect of this application, a flow channel for accommodating a heat exchange medium is formed inside the end wall.

In the above technical solution, the flow channel formed inside the end wall can accommodate the heat exchange medium, so that the end wall can play a role in adjusting the temperature of the internal structure of the box body, and there is no need to arrange a thermal management component in the box body, which improves the utilization of space inside the battery equipped with such box and is conducive to increasing the energy density of the battery equipped with such box.

In some embodiments of the first aspect of this application, when viewed in the thickness direction of the end wall, the mounting member does not overlap with the flow channel.

In the above technical solution, the mounting member does not overlap with the flow channel, and the mounting member and the flow channel do not interfere with each other, which can avoid the heat exchange medium in the flow channel reducing the service life of the mounting member, and can also prevent the mounting member from affecting the flow of the heat exchange medium in the flow channel and reducing the heat exchange efficiency.

In some embodiments of the first aspect of this application, the end wall is provided with an inlet for the heat exchange medium to flow into the flow channel and an outlet for the heat exchange medium in the flow channel to flow out.

In the above technical solution, the end wall is provided with the inlet and the outlet of the heat exchange medium, so that the heat exchange medium can flow in the flow channel, which can make heat exchange faster, thereby improving the heat exchange efficiency.

In some embodiments of the first aspect of this application, the end wall is provided with a plurality of such outlets.

In the above technical solution, the end wall is provided with a plurality of outlets, which is conducive to quickly discharging the heat exchange medium from the flow channel, and when the heat exchange medium is a cooling medium, the heat inside the box can be quickly taken away, thereby rapidly reducing the temperature inside the box.

In some embodiments of the first aspect of this application, the box includes a plurality of such mounting structures, the plurality of mounting structures being spaced apart from each other.

In the above technical solution, the box includes a plurality of mounting structures spaced apart from each other, where the plurality of mounting positions can be formed between the box body and the device, which not only makes the connection between the box body and the electric device more stable, but also can reduce the load borne by each mounting position.

In some embodiments of the first aspect of this application, the box body further includes a side wall, where the side wall surrounds an outer periphery of the end wall, and in a first direction, the side wall includes two opposite first side walls, and the mounting member does not exceed beyond an outer side face of the first side wall.

In the above technical solution, the structure of the mounting member does not exceed beyond the outer side face of the first side wall, and therefore along the first direction, the mounting member does not extend to the side direction of the box body, and the mounting member does not occupy the space of the box body outside the first side wall. Thus, the size of the internal space of the box body along the first direction can be increased so that the space of the box body originally occupied by the mounting member on the first direction can be used for accommodating battery cells, which is conducive to increasing the energy density and pack assembly efficiency of batteries equipped with such box.

In some embodiments of the first aspect of this application, the box includes a first flange portion, where the first flange portion is arranged at one end of the first side wall away from the end wall, and the first flange portion at least partially protrudes from an inner side face of the side wall.

In the above technical solution, compared with the situation that the first flange portion wholly protrudes from an outer side face of the side wall, the first flange portion at least partially protrudes from an inner side face of the side wall, so that the box body and the first flange portion share part of space, which can reduce the external space occupied by the first flange portion along a side direction of the box body. Thus, the size of the internal space of the box body along the side direction of the box body can be increased so that the space of the box body originally occupied by the mounting member on the side direction of the box body can be used for accommodating battery cells, which is conducive to increasing the energy density and pack assembly efficiency of batteries equipped with such box.

In some embodiments of the first aspect of this application, the box body further includes a side wall, where the side wall surrounds an outer periphery of the end wall, the side wall is provided with a hoisting structure, and the hoisting structure is configured to engage with hoisting gear to move the box.

In the technical solution, the arrangement of the hoisting structure facilitates the assembly and transport of the box.

In some embodiments of the first aspect of this application, the hoisting structure includes a first hoisting hole, the first hoisting hole being configured to engage with the hoisting gear to lock the hoisting gear to the box body.

In the above technical solution, the hoisting structure includes the first hoisting hole, and the first hoisting hole engages with the hoisting gear to lock the hoisting gear to the box body, which is conducive to move the box through engagement of the box and the hoisting gear. Compared with the situation that a hoisting member protruding from the outer side face of the side wall is installed on the side wall, arranging the first hoisting hole on the side wall can avoid occupying the external space of the box body in the side direction. Thus, the size of the internal space of the box body along the side direction of the box body can be increased so that the space of the box body originally occupied by the mounting member on the side direction of the box body can be used for accommodating battery cells, which is conducive to increasing the energy density and pack assembly efficiency of batteries equipped with such box.

In some embodiments of the first aspect of this application, the hoisting structure includes a second hoisting hole, the second hoisting hole being configured for positional engagement with the hoisting gear.

In the technical solution, the arrangement of the second hoisting hole can keep the hoisting gear and the box in relatively accurate positions before the hoisting gear is engaged with the first hoisting hole, so that the hoisting gear can accurately engage with the first hoisting hole to lock the hoisting gear to the box body.

In some embodiments of the first aspect of this application, the hoisting structure includes two second hoisting holes, the two second hoisting holes being respectively located at two sides of the first hoisting hole.

In the above technical solution, the second hoisting holes are respectively arranged on the two sides of the first hoisting hole, which can further accurately position the hoisting gear and the first hoisting hole, so that the hoisting gear can be accurately locked to the box body at the first hoisting hole.

In some embodiments of the first aspect of this application, the first hoisting hole is a threaded hole; and/or the second hoisting hole is a waist-shaped hole.

In the above technical solution, if the first hoisting hole is a threaded hole, the box body and the hoisting gear can be locked by the threaded engagement of the hoisting gear and the first hoisting hole. Such locking method is simple and convenient, and can improve the hoisting operation efficiency. If the second hoisting hole is a waist-shaped hole, after the hoisting gear comes into positional engagement with the second hoisting hole, the risk that the hoisting gear rotates in the second hoisting hole is relatively small, which can enhance the positioning stability.

In some embodiments of the first aspect of this application, the side wall is provided with a plurality of such hoisting structures, the plurality of hoisting structures being spaced apart from each other.

In the above technical solution, the side wall is provided with a plurality of hoisting structures spaced apart from each other, and the hoisting gear can engage with the plurality of hoisting structures, or a plurality of hoisting gears can engage with the plurality of hoisting structures to move the box, which can enhance the stability of hoisting operations.

According to a second aspect, an embodiment of this application provides a box assembly, where the box assembly includes a cover and the box according to any one of the embodiments of the first aspect, and the cover is configured to cover the opening.

In the above technical solution, the mounting member of the box according to embodiments of the first aspect occupies little or no external space in the side direction of the box body, so the box assembly equipped with such box can provide, by increasing the size of the internal space of the box body along the side direction of the box body, the space of the box body originally occupied by the mounting member on the side direction of the box body for accommodating battery cells, which is conducive to increasing the energy density and pack assembly efficiency of batteries equipped with such box assembly.

According to a third aspect, an embodiment of this application further provides a battery including a battery cell and the box assembly according to the embodiments of the second aspect, where the battery cell is accommodated in the box body.

In the above technical solution, the internal space of the box assembly according to the embodiments of the second aspect can accommodate more battery cells, and batteries equipped with such box assembly can have relatively high energy density and pack assembly efficiency.

According to a fourth aspect, an embodiment of this application provides an electric device including the battery according to any one of the embodiments of the third aspect.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is a schematic structural diagram of an assembled box assembly according to some embodiments of this application;
FIG. 4 is an exploded view of a box assembly according to some embodiments of this application;
FIG. 5 is a schematic structural diagram of a box according to some embodiments of this application;
FIG. 6 is a schematic diagram of a box according to some embodiments of this application from another perspective;
FIG. 7 is a view of a box according to some embodiments of this application as viewed from the opening side of the box body;
FIG. 8 is a cross-sectional view taken along line A1-A1 in FIG. 7;
FIG. 9 is a view of a box according to some other embodiments of this application as viewed from the opening side of the box body;
FIG. 10 is a cross-sectional view taken along line A2-A2 in FIG. 9;
FIG. 11 is a view of a box according to still some other embodiments of this application as viewed from the opening side of the box body;
FIG. 12 is a cross-sectional view taken along line A3-A3 in FIG. 11;
FIG. 13 is an enlarged view of a position B1 in FIG. 12;
FIG. 14 is a schematic structural diagram of the box body in FIG. 12;
FIG. 15 is an enlarged view of a position B2 in FIG. 14;
FIG. 16 is a schematic structural diagram of a mounting member according to some embodiments of this application;
FIG. 17 is a structural view of a box according to some other embodiments of this application;
FIG. 18 is a view of a box according to yet some other embodiments of this application as viewed from the opening side of the box body;
FIG. 19 is a cross-sectional view taken along line A4-A4 in FIG. 18;
FIG. 20 is an enlarged view of a position B3 in FIG. 19;
FIG. 21 is a schematic structural diagram of the box body in FIG. 19;
FIG. 22 is an enlarged view of a position B4 in FIG. 21;
FIG. 23 is an enlarged view of a position B5 in FIG. 19;
FIG. 24 is a schematic structural diagram of a box body according to some other embodiments of this application;
FIG. 25 is a cross-sectional view taken along line A5-A5 in FIG. 24;
FIG. 26 is an enlarged view of a position B6 in FIG. 24; and
FIG. 27 is a schematic structural diagram of a box according to some other embodiments of this application.

Reference signs: 1000: vehicle; 100: battery; 10: battery cell; 20: box assembly; 21: box; 211: box body; 2111: opening; 2112: end wall; 21121: outer side face of end wall; 21122: inner side face of end wall; 21123: outer surface of end wall; 21124: flow channel; 21125: installation groove; 2113: side wall; 21131: first side wall; 21132: second side wall; 21133: third side wall; 2114: first flange portion; 2115: second flange portion; 2116: third flange portion; 212: mounting structure; 2121: mounting hole; 213: mounting member; 21221: first connecting segment; 21222: second connecting segment; 21223: first tapered surface for welding; 21224: second tapered surface for welding; 2123: first installing hole; 21231: first hole segment; 21232: second hole segment; 21233: first tapered surface; 21234: first cylindrical surface; 21235: second tapered surface; 2124: first weld seam; 2125: second weld seam; 2126: partition beam; 21261: second installing hole; 21262: third tapered surface; 21263: third cylindrical surface; 21264: third hole segment; 21265: fourth hole segment; 2128: protective structure; 2129: inlet; 2130: outlet; 2131: first pipe; 2132: second pipe; 2133: hoisting structure; 21331: first hoisting hole; 21332: second hoisting hole; 2134: third weld seam; 2135: blocking portion; 22: cover; 23: sealing member; 200: controller; 300: motor; X: thickness direction of end wall; Y: first direction; and Z: second direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. Generally, the components of the embodiments of this application as described and illustrated in the accompanying drawings herein can be arranged and designed in a variety of configurations.

Therefore, the following detailed description of the embodiments of this application as provided in the accompanying drawings is not intended to limit the scope of this application but merely to represent selected embodiments of this application. All other embodiments obtained by persons of ordinary skill in the art based on the embodiments of this application without creative efforts shall fall within the protection scope of this application.

It should be noted that, without conflict, the embodiments and features in the embodiments in this application may be combined with each other.

It should be noted that similar reference numerals and letters indicate similar items in the following drawings, and therefore once an item is defined in one drawing, it does not need to be further defined or explained in the subsequent drawings.

In the description of the embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The inventors have found that a battery includes a box assembly and a battery cell, the box assembly includes a box body and a mounting structure, and an electric device and the box body are engaged in a side direction of the box body through the mounting structure, which makes the mounting structure occupy a large space in the side direction of the box body, and consequently the box body cannot have its internal space size increased in its side direction, seriously restricting the pack assembly efficiency of batteries.

Based on the above considerations, to improve the pack assembly efficiency of batteries, after in-depth research, the inventors have designed a box, where a box body of the box has an opening and an end wall arranged oppositely, a mounting structure of the box body is installed on the end wall of the box body, and when viewed in a thickness direction of the end wall, the mounting structure overlaps with the end wall.

The mounting structure is arranged on the end wall of the box, which can reduce the size of the part of the mounting structure extending to a side direction of the box body or prevent the mounting structure from extending to the side direction of the box body, thereby reducing the external space occupied by the mounting structure along the side direction of the box body or avoiding the mounting structure occupying the external space along the side direction of the box body. Thus, the size of the internal space of the box body along the side direction of the box body can be increased so that the space originally occupied by the mounting structure along the side direction of the box body can be used for accommodating battery cells, which is conducive to increasing the energy density and pack assembly efficiency of batteries equipped with such box.

An embodiment of this application provides an electric device that uses a battery as its power source. The electric device may be, but is not limited to, a mobile phone, a tablet, a laptop computer, an electric toy, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

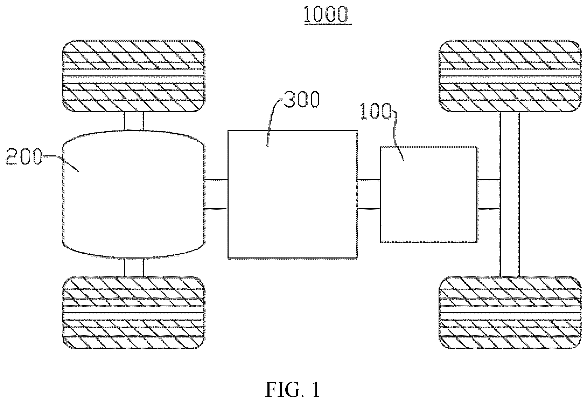

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

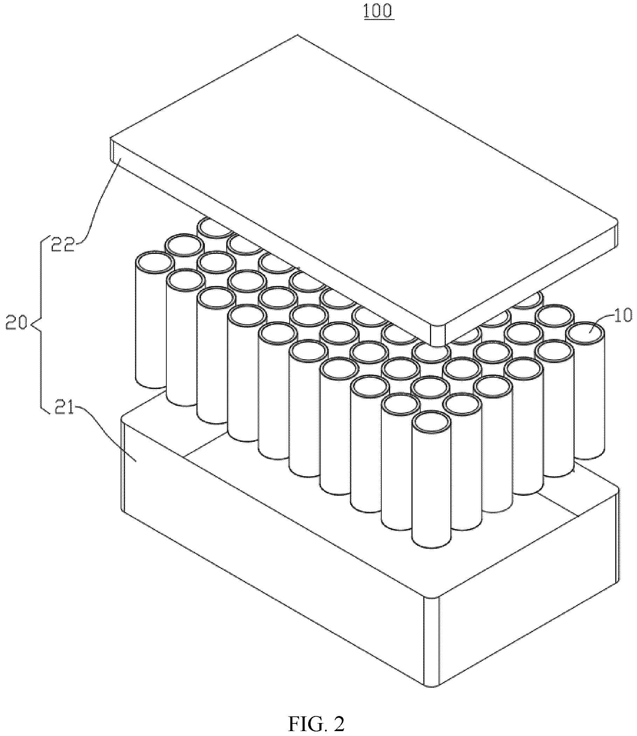

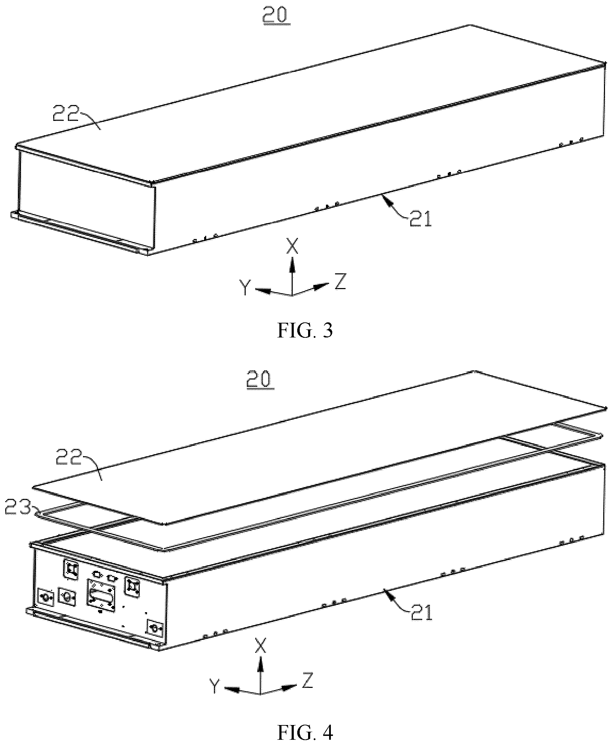

Referring to FIG. 2, FIG. 2 is an exploded view of a battery 100 according to some embodiments of this application. The battery 100 includes a battery cell 10 and a box assembly 20. The box assembly 20 is configured to provide an accommodating space for the battery cell 10. The box assembly 20 may be a variety of structures. In some embodiments, the box assembly 20 may include a box 21 and a cover 22, where the box 21 and the cover 22 fit together to jointly define a space for accommodating the battery cell 10. The box 21 may be a hollow structure with an opening 2111 at one end to form an accommodating cavity for accommodating the battery cell 10, the cover 22 may be a plate-like structure, and the cover 22 covers the opening side of the box 21, so that the box 21 and the cover 22 jointly define an accommodating space; or the box 21 and the cover 22 may be a hollow structure with an opening 2111 at one side to form an accommodating cavity for accommodating the battery cell 10, and the opening side of the box 21 covers the opening side of the cover 22. Certainly, the box assembly 20 formed by the box 21 and the cover 22 may be a variety of shapes, for example, a cylinder or a cuboid. FIG. 2, FIG. 3, and FIG. 4 show the box 21 being a hollow structure with an opening at one end and the cover 22 being a plate-like structure. A sealing member 23 may further be provided between the box 21 and the cover 22, and the box 21, the cover 22, and the sealing member 23 jointly form a closed space for accommodating the battery cell 10.

In the battery 100, the battery cell 10 may be provided in plurality, and the plurality of battery cells 10 may be connected in series, parallel, or series-parallel, where being connected in series-parallel means a combination of series and parallel connections of the plurality of battery cells 10. The plurality of battery cells 10 may be directly connected in series, parallel, or series-parallel, and then an entirety of the plurality of battery cells 10 is accommodated in the box assembly 20; or certainly, the battery 100 may be formed by a plurality of battery cells 10 connected in series, parallel, or series-parallel first to form a battery module and then a plurality of battery modules being connected in series, parallel, or series-parallel to form an entirety which is accommodated in the box assembly 20. The battery 100 may further include other structures. For example, the battery 100 may further include a busbar configured to implement electrical connection between the plurality of battery cells 10.

Each battery cell 10 may be a secondary battery 100 or a primary battery 100, and may be a lithium-sulfur battery 100, a sodium-ion battery 100, or a magnesium-ion battery 100, but is not limited thereto. The battery cell 10 may be cylindrical, flat, cuboid, or of other shapes.

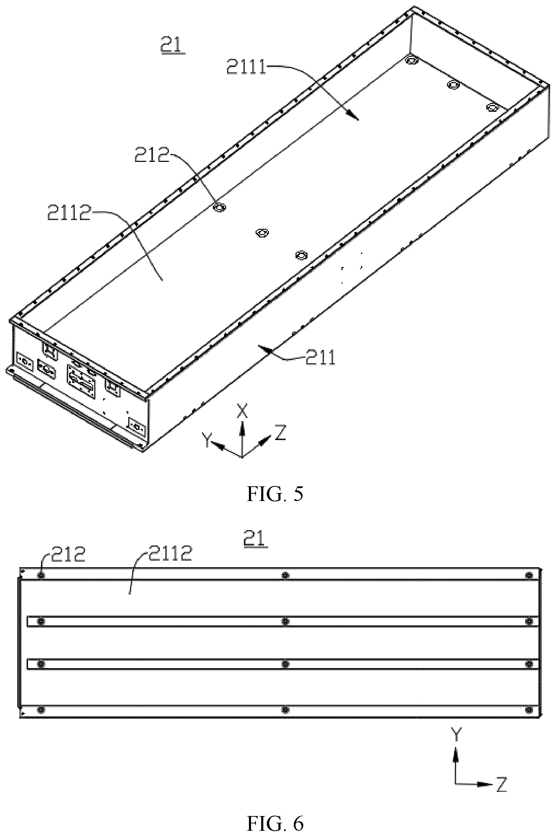

As shown in FIG. 5 to FIG. 8, in some embodiments, the box 21 includes a box body 211 and a mounting structure 212. The box body 211 has an opening 2111 and an end wall 2112 arranged oppositely. The mounting structure 212 is arranged on the end wall 2112. when viewed in a thickness direction X of the end wall, the mounting structure 212 overlaps with the end wall 2112, and the mounting structure 212 is configured to connect the box body 211 and a device.

The end wall 2112 may be a plate-like structure. The end wall 2112 may be in various shapes, for example, the end wall 2112 is a rectangular plate, a circular plate, or the like, which is not limited in this application. The opening 2111 and the end wall 2112 of the box body 211 are oppositely arranged along the thickness direction X of the end wall. The opening 2111 of the box body 211 allows the battery cell 10 to enter the space formed by the box body 211; or the opening 2111 of the box body 211 may allow the battery cell 10 to be placed on the end wall 2112, so that the end wall 2112 can support the battery cell 10.

When viewed in the thickness direction X of the end wall, the mounting structure 212 overlaps with the end wall 2112, which can be understood that a projection of the mounting structure 212 at least partially overlaps in the thickness direction X of the end wall, so that the end wall 2112 and the mounting structure 212 share at least part of the space when viewed in the thickness direction X of the end wall.

The mounting structure 212 is configured to connect the box body 211 and the device, where the device includes, but is not limited to, an electric device, a transportation device, a storage device. The mounting structure 212 may be a through hole, a blind hole, a threaded hole, a hook, a slide rail, a guide rail, a lock, and other structures. The mounting structure 212 may be a structure directly formed on the end wall 2112 and integrally formed with the end wall 2112. For example, the mounting structure 212 is a threaded hole formed in the end wall 2112, or the mounting structure 212 is a track integrally extruded with the end wall 2112, or the mounting structure 212 may be formed on another component connected to the end wall 2112. For example, the mounting structure 212 is a threaded hole on a component such as a sleeve, a nut, or a mounting beam, or the mounting structure 212 is a track on a guide rail.

After the battery 100 equipped with such box 21 is connected to the electric device, the end wall 2112 may be located in different directions with respect to the battery cell 10. For example, the end wall 2112 may be located below the battery cell 10 and support the battery cell 10. In this case, the end wall 2112 is the bottom wall of the box body 211 and bears at least part of the weight of the battery cell 10. For another example, the end wall 2112 may alternatively be located above the battery cell 10. In this case, the end wall 2112 is the top wall of the box body 211.

The mounting structure 212 is arranged on the end wall 2112 of the box 21, which can reduce the size of the part of the mounting structure 212 extending to a side of the box body 211 or prevent the mounting structure 212 from extending to a side direction of the box body 211, thereby reducing the external space occupied by the mounting structure 212 along the side direction of the box body 211 or avoiding the mounting structure 212 occupying the external space along the side direction of the box body 211. Thus, the size of the internal space of the box body 211 along the side direction of the box body 211 can be increased so that the space originally occupied by the mounting structure 212 along the side direction of the box body 211 can be used for accommodating battery cells 10, which is conducive to increasing the energy density and pack assembly efficiency of batteries 100 equipped with such box 21. The side direction of the box body 211 in this embodiment of this application is any direction perpendicular to the thickness direction X of the end wall.

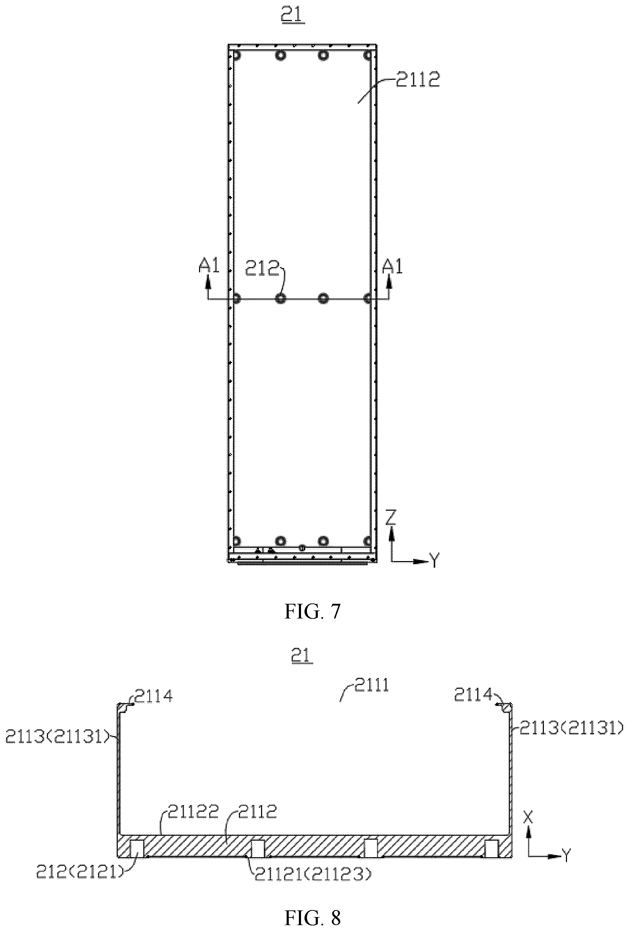

The mounting structure 212 may be in various forms. For example, as shown in FIG. 7 to FIG. 10, in some embodiments, the mounting structure 212 includes a mounting hole 2121. The mounting hole 2121 is directly arranged on the end wall 2112. Along the thickness direction X of the end wall, the mounting hole 2121 is recessed from a side of the end wall 2112 facing away from the battery cell 10 towards a direction close to the battery cell 10. The mounting hole 2121 may be a circular hole, a square hole, a hexagonal hole, or the like, which is not limited in this application.

The mounting hole 2121 may be provided in one or in plural, and the plural means two or more than two. In this embodiment where there are a plurality of mounting holes 2121, the plurality of mounting holes 2121 being spaced apart from each other.

The mounting structure 212 is a mounting hole 2121 arranged in the end wall 2112, which is conducive to simplifying the structure of the box 21 and reducing the weight of the box 21.

In some embodiments, the wall of the mounting hole 2121 is a smooth or curved surface.

In some other embodiments, the mounting hole 2121 may be provided with internal threads, and the internal threads are provided on the wall surface of the mounting hole 2121, so that the mounting hole 2121 is a threaded hole.

The mounting hole 2121 is provided with the internal threads, so that the device can threadedly engage with the mounting hole 2121, thereby realizing the connection between the box body 211 and the device. This connection method is simple and convenient and provides good stability.

As shown in FIG. 8, in some embodiments, the mounting hole 2121 is a blind hole.

The blind hole is a through hole connecting a surface layer and the inner layer without penetrating through the whole plate, that is, the mounting hole 2121 does not penetrate through the end wall 2112, or the mounting hole 2121 does not extend to a side of the end wall 2112 facing the battery cell 10 along the thickness direction X of the end wall.

Therefore, the mounting hole 2121 is a blind hole, which means that the mounting hole 2121 does not penetrate through the end wall 2112, thereby reducing the impact of arrangement of the mounting hole 2121 on the structural strength of the end wall 2112. In addition, there is no need to seal the mounting hole 2121, which reduces the manufacturing difficulty of the box 21.

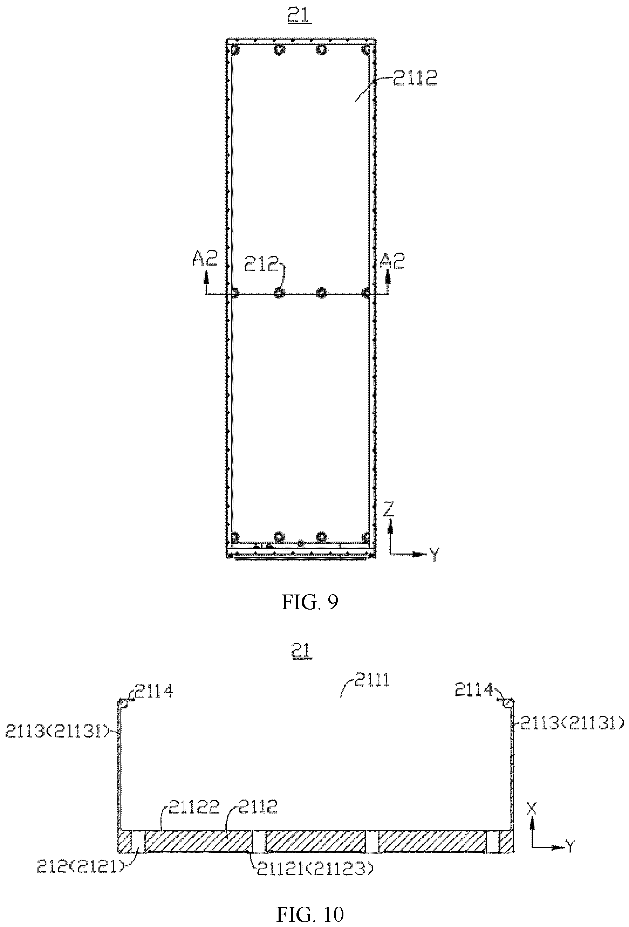

As shown in FIG. 9 and FIG. 10, in some other embodiments, the mounting hole 2121 may alternatively be a through hole penetrating the end wall 2112.

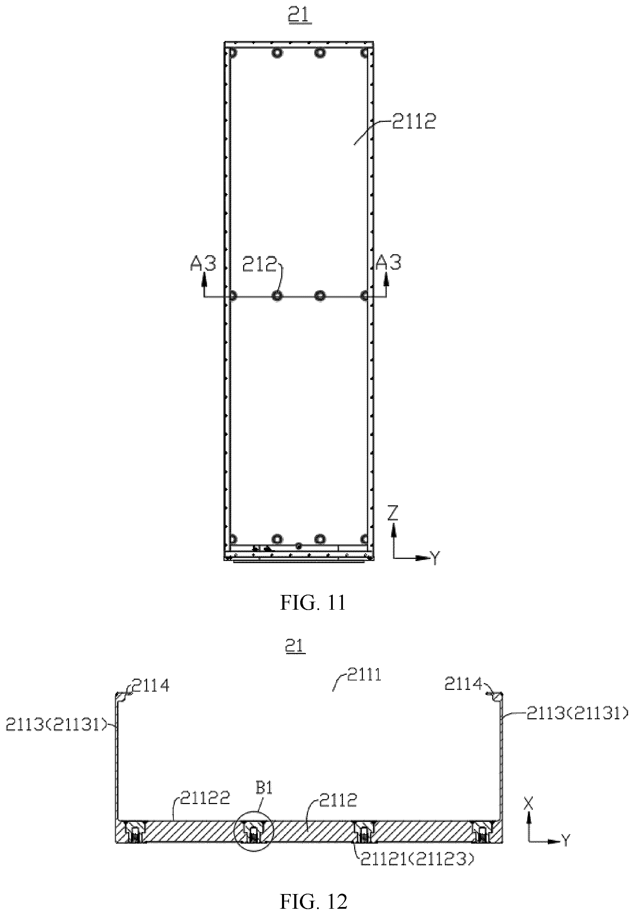

As shown in FIG. 11 to FIG. 13, in some other embodiments, the box 21 further includes a mounting member 213 installed on the end wall 2112, where the mounting structure 212 is placed on the mounting member 213.

The mounting member 213 and the end wall 2112 can be fixedly connected through, for example, bonding and welding. The mounting member 213 and the end wall 2112 may alternatively be detachably connected through, for example, bolts and screws. The device is connected to the box body 211 through the mounting member 213. The mounting structure 212 is indirectly arranged on the end wall 2112 through the mounting member 213. The mounting member 213 may be a structural member such as a mounting beam, a corner member, or a reinforcing plate. The mounting member 213 may alternatively be a standard industrial member such as a sleeve, a nut, or a slide rail. A mounting structure such as a through hole, a threaded hole, or a slot can be processed in the mounting member 213. The mounting member 213 may alternatively be a connecting structure that comes with an industrial component. For example, when the mounting member 213 is a nut, the mounting structure 212 is a threaded hole on the nut.

The box body 211 may include one mounting member 213 or may include a plurality of mounting members 213. In the embodiment where the box body 211 includes a plurality of mounting members 213, the plurality of mounting members 213 being spaced apart from each other on the end wall 2112.

One mounting member 213 may be provided with one mounting structure 212 or may be provided with a plurality of mounting structures 212.

In some embodiments, the mounting member 213 is welded to the end wall 2112.

The mounting member 213 and the end wall 2112 may be welded through laser welding, ultrasonic welding, resistance welding, and gas welding.

The mounting member 213 and the end wall 2112 are welded, which not only makes the connection easy, but also enables the connection between the mounting member 213 and the end wall 2112 to be stronger and provide greater load-bearing capacity.

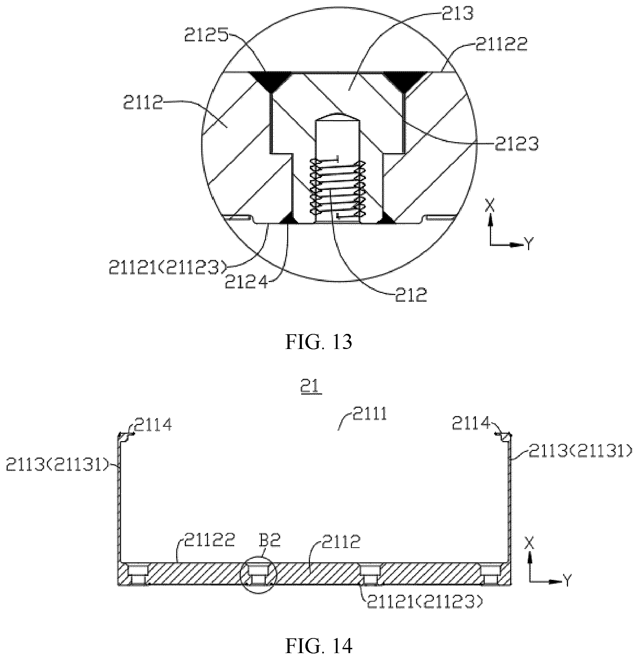

As shown in FIG. 13, in some embodiments, a first weld seam 2124 is formed between the mounting member 213 and the end wall 2112, and the first weld seam 2124 is located on an outer side face 21121 of the end wall.

The outer side face 21121 of the end wall with the first weld seam 2124 formed refers to a surface of a region of the end wall 2112 that overlaps with the mounting member 213 and that is farthest away from the battery cell 10 along the thickness direction X of the end wall. The first weld seam 2124 is a welding mark formed by welding the mounting member 213 and the end wall 2112.

The first weld seam 2124 may be in various forms. For example, the first weld seam 2124 may include a plurality of first welding marks, the plurality of first welding marks being spaced apart from each other around the periphery of the mounting member 213. In this way, the mounting member 213 is welded to the end wall 2112 at a plurality of positions in the circumferential direction, which enhances the connection stability. For another example, the first weld seam 2124 is a closed-loop structure that extends in the circumferential direction of the mounting member 213 and is closed in the circumferential direction of the mounting member 213. In this way, the mounting member 213 is welded to the end wall 2112 at any position in the circumferential direction of the mounting member 213, which not only connects the end wall 2112 and the mounting member 213, but also acts as a seal, reducing the risk of foreign substances entering the gap between the end wall 2112 and the mounting member 213.

The first weld seam 2124 is located on the outer side face 21121 of the end wall, and the end wall 2112 and the mounting member 213 can be welded on the outer side of the end wall 2112, which makes the welding between the end wall 2112 and the mounting member 213 more convenient.

In some embodiments, the mounting member 213 may be directly connected to the outer side face 21121 of the end wall.

In some other embodiments, the end wall 2112 may be further provided with a first installing hole 2123, where along the thickness direction X of the end wall, the first installing hole 2123 is recessed from the outer side face 21121 of the end wall to a direction close to the battery cell 10 (not shown in FIG. 13), and the first installing hole 2123 is recessed from the outer side face 21121 of the end wall to the interior of the box body 211. The mounting member 213 is at least partially inserted into the first installing hole 2123, so that the mounting member 213 and the end wall 2112 share at least part of the space along the thickness direction X of the end wall, which can reduce the size of the overall structure formed by the box body 211 and the mounting member 213 in the thickness direction X of the end wall.

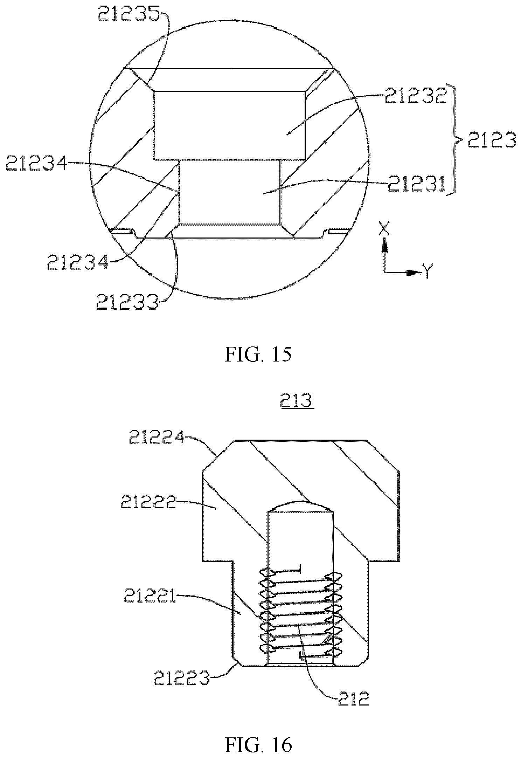

The first installing hole 2123 may be a circular hole, a square hole, a hexagonal hole, or the like, which is not limited in this application. The first installing hole 2123 may be a blind hole that does not penetrate through the two sides of the end wall 2112 along the thickness direction of the end wall 2112. The first installing hole 2123 may alternatively be a through hole penetrating the two sides of the end wall 2112 in the thickness direction X of the end wall. In the embodiment where the first installing hole 2123 is a through hole penetrating the two sides of the end wall 2112 along the thickness direction X of the end wall, the first installing hole 2123 may alternatively be a stepped hole. FIG. 13, FIG. 14, and FIG. 15 show the first installing hole 2123 being a stepped hole. As shown in FIG. 15, the first installing hole 2123 includes a first hole segment 21231 and a second hole segment 21232 that communicate along the thickness direction X of the end wall. Along the thickness direction X of the end wall, a projection of the first hole segment 21231 falls in the second hole segment 21232, and under the condition that both the first hole segment 21231 and the second hole segment 21232 are circular holes, a diameter of the second hole segment 21232 is larger than that of the first hole segment 21231. The second hole segment 21232 is closer to the interior of the box body 211 than the first hole segment 21231, or the second hole segment 21232 is closer to the battery cells 10 in the box 21 than the first hole segment 21231 (not shown in FIG. 13 to FIG. 15). The mounting member 213 may have a stepped structure matching the stepped hole. As shown in FIG. 13, the mounting member 213 includes a first connecting segment 21221 and a second connecting segment 21222 connected along the thickness direction X of the end wall, where the outer profile of a projection of the second connecting segment 21222 in a plane perpendicular to the thickness direction X of the end wall surrounds the outer profile of a projection of the first connecting segment 21221 in a plane perpendicular to the thickness direction X of the end wall. In the embodiment where both the first connecting segment 21221 and the second connecting segment 21222 are cylindrical structures, the outer diameter of the second connecting segment 21222 is larger than that of the first connecting segment 21221. The first connecting segment 21221 is at least partially inserted into the first hole segment 21231, and the second connecting segment 21222 is at least partially inserted into the second hole segment 21232. An end surface of the second connecting segment 21222 connected to the first connecting end abuts against a surface where the first hole segment 21231 is connected to the second hole segment 21232.

As shown in FIG. 13, FIG. 15, and FIG. 16, in some embodiments, the wall surface of the first installing hole 2123 includes a first tapered surface 21233 and a first cylindrical surface 21234 connected along the thickness direction X of the end wall, where a large end of the first tapered surface 21233 is connected to the outer side face 21121 of the end wall, and a small end of the first tapered surface 21233 is connected to one end of the first cylindrical surface 21234. The first tapered surface 21233 is opposite part of the outer peripheral surface of the mounting member 213, and a first welding space is formed between the first tapered surface 21233 and the outer peripheral surface of the mounting member 213, and along the thickness direction X of the end wall, the first weld seam 2124 is at least partially located in the first welding space, which can reduce the size of the first weld seam 2124 protruding from the outer side face 21121 of the end wall along the thickness direction X of the end wall or can prevent the first weld seam 2124 from protruding from the outer side face 21121 of the end wall along the thickness direction X of the end wall. As shown in FIG. 13, FIG. 15, and FIG. 16, the part of the outer peripheral surface of the mounting member 213 opposite the first tapered surface 21233 may alternatively be a first tapered surface 21223 for welding, and a large end of the first tapered surface 21223 for welding is arranged far away from the battery cell 10, so that a V-shaped first welding space is formed between the first tapered surface 21233 and the outer peripheral surface (first tapered surface 21223 for welding) of the mounting member 213. The first tapered surface 21233 is part of the wall surface of the first hole segment 21231, and the first tapered surface 21223 for welding is at least part of the outer peripheral surface of the first connecting segment 21221 of the mounting member 213. The first tapered surface 21233 may be a conical surface or a pyramid surface, and the first tapered surface 21223 for welding may be a conical surface or a pyramid surface.

In some embodiments, a second weld seam 2125 is formed between the mounting member 213 and the end wall 2112, and the second weld seam 2125 is located on an inner side face 21122 of the end wall.

The inner side face 21122 of the end wall with the second weld seam 2125 is a surface of the end wall 2112 closest to the battery cell 10 in a region of the end wall 2112 overlapping the mounting member 213 in the thickness direction X of the end wall.

The second weld seam 2125 is a welding mark formed by welding the mounting member 213 and the end wall 2112.

The second weld seam 2125 may be in various forms. For example, the second weld seam 2125 may include a plurality of second welding marks, the plurality of second welding marks being spaced apart from each other around the periphery of the mounting member 213. In this way, the mounting member 213 is welded to the end wall 2112 at a plurality of positions in the circumferential direction, which enhances the connection stability. For another example, the second weld seam 2125 is a closed-loop structure that extends in the circumferential direction of the mounting member 213 and is closed in the circumferential direction of the mounting member 213. In this way, the mounting member 213 is welded to the end wall 2112 at any position in the circumferential direction of the mounting member 213, which not only connects the end wall 2112 and the mounting member 213, but also acts as a seal, reducing the risk of foreign substances entering the gap between the end wall 2112 and the mounting member 213 and leakage of the box 21.

Still referring to FIG. 13 to FIG. 15, in the embodiment where the first installing hole 2123 is a through hole penetrating the two sides of the end wall 2112 along the thickness direction X of the end wall, the wall surface of the first installing hole 2123 includes a second tapered surface 21235, where a large end of the second tapered surface 21235 is connected to the inner side face 21122 of the end wall, and a small end of the second tapered surface 21235 is arranged close to an end of the first cylindrical surface 21234. The second tapered surface 21235 is opposite part of the outer peripheral surface of the mounting member 213, and a second welding space is formed between the second tapered surface 21235 and the outer peripheral surface of the mounting member 213, and along the thickness direction X of the end wall, the second weld seam 2125 is at least partially located in the second welding space, which can reduce the size of the second weld seam 2125 protruding from the inner side face 21122 of the end wall along the thickness direction X of the end wall or can prevent the second weld seam 2125 from protruding from the inner side face 21122 of the end wall along the thickness direction X of the end wall.

As shown in FIG. 13, FIG. 15, and FIG. 16, the part of the outer peripheral surface of the mounting member 213 opposite the second tapered surface 21235 may alternatively be a second tapered surface 21224 for welding, and a large end of the second tapered surface 21224 for welding is arranged close to the battery cell 10, so that a V-shaped second welding space is formed between the second tapered surface 21235 and the outer peripheral surface (second tapered surface 21224 for welding) of the mounting member 213. As shown in FIG. 13, FIG. 15, and FIG. 16, the second tapered surface 21235 is part of the wall surface of the second hole segment 21232, and the second tapered surface 21224 for welding is at least part of the outer peripheral surface of the second connecting segment 21222 of the mounting member 213. The second tapered surface 21235 may be a conical surface or a pyramid surface, and the second tapered surface 21224 for welding may be a conical surface or a pyramid surface.

The mounting member 213 and the end wall 2112 are welded to form the second weld seam 2125 on the inner side of the end wall 2112, and the mounting member 213 and the end wall 2112 are welded to form the second weld seam 2125 on the outer side of the end wall 2112, so there are two welding positions between the end wall 2112 and the mounting member 213, which further enhances the connection strength between the end wall 2112 and the mounting member 213.

In the embodiment where the first weld seam 2124 and the second weld seam 2125 are both closed-loop structures along the circumferential direction of the mounting member 213, a two-layer welding seal is formed between the end wall 2112 and the mounting member 213, which improves the sealing performance between the end wall 2112 and the mounting member 213.

In some embodiments, the mounting member 213 is at least partially embedded in the end wall 2112.

When the mounting member 213 is embedded in the end wall 2112, the mounting member 213 is at least partially located inside the end wall 2112, and when viewed in a direction perpendicular to the thickness direction X of the end wall, the end wall 2112 at least partially overlaps with the mounting member 213. Specifically, a first installing hole 2123 can be opened in the end wall 2112, and the mounting member 213 is inserted into the first installing hole 2123, so that the mounting member 213 is at least partially embedded in the end wall 2112. In the thickness direction X of the end wall, depth of the mounting member 213 embedded in the end wall 2112 may vary with depth of the first installing hole 2123 and thickness of the end wall 2112.

Along the thickness direction X of the end wall, only one part of the mounting member 213 may be embedded, and another part of the mounting member 213 extends beyond the outer side face 21121 of the end wall. Alternatively, along the thickness direction X of the end wall, it is possible that only one part of the mounting member 213 is embedded, and another part of the mounting member 213 extends beyond the inner side face 21122 of the end wall. Alternatively, along the thickness direction X of the end wall, it is possible that only one part of the mounting member 213 is embedded, one part of the mounting member 213 extends beyond the outer side face 21121, and another part of the mounting member 213 extends beyond the inner side face 21122 of the end wall. Certainly, the mounting member 213 may be wholly embedded in the end wall 2112.

The mounting member 213 is at least partially embedded in the end wall 2112, so that the mounting member 213 and the end wall 2112 share space in the thickness direction X of the end wall 2112, which reduces or avoids the external space of the box body 211 occupied by the mounting member 213, thereby reducing the overall structural size of the box 21; and the mounting member 213 is at least partially embedded in the end wall 2112, which can increase the combined area between the mounting member 213 and the end wall 2112, thereby enhancing the connection stability between the end wall 2112 and the mounting member 213.

In some embodiments, one end of the mounting member 213 is flush with the outer surface 21123 of the end wall; and/or one end of the mounting member 213 protrudes from the outer surface 21123 of the end wall.

The outer surface 21123 of the end wall is a surface of the end wall 2112 farthest away from the interior of the box body 211 along the thickness direction X of the end wall. In some embodiments, the outer side face 21121 of the end wall and the outer surface 21123 of the end wall may be the same surface. In some other embodiments, the outer side face 21121 of the end wall and the outer surface 21123 of the end wall may alternatively be different surfaces.

An end of the mounting member 213 facing away from the interior of the box body 211 may be flush with the outer surface 21123 of the end wall or may protrude from the outer surface 21123 of the end wall.

In the embodiment where the mounting structure 212 includes a plurality of mounting members 213, one end of all the mounting members 213 facing the exterior of the box body 211 in the thickness direction X of the end wall may be coplanar, which is conducive to the cooperation of all the mounting members 213 with the device.

One end of the mounting member 213 is flush with the outer surface 21123 of the end wall, which can avoid the mounting member 213 exceeding the outer surface 21123 of the end wall to occupy the external space of the end wall 2112, thereby further reducing the volume of the box 21. One end of the mounting member 213 protrudes from the outer surface 21123 of the end wall, making it convenient for the mounting member 213 to engage with the device to connect the box body 211 and the device.

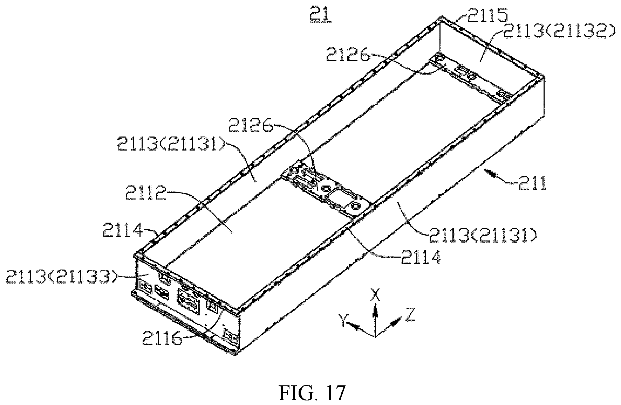

As shown in FIG. 17, in some embodiments, the box 21 further includes a partition beam 2126, where the partition beam 2126 is located in the box body 211 and arranged on the end wall 2112, and when viewed in the thickness direction X of the end wall, the mounting structure 212 overlaps with the partition beam 2126.

The partition beam 2126 is arranged inside the box body 211, the partition beam 2126 can divide the internal space of the box body 211 into a plurality of subspaces, and each subspace can be configured to accommodate at least one battery module.

The partition beam 2126 may be fixed to the end wall 2112, for example, the partition beam 2126 is welded to the inner surface of the end wall 2112. The partition beam 2126 may alternatively be detachably connected to the end wall 2112, for example, the partition beam 2126 is connected to the end wall 2112 through bolts and screws. The mounting member 213 may be connected to the partition beam 2126, or may not be connected to the partition beam 2126.

When viewed in the thickness direction X of the end wall, the mounting structure 212 overlaps with the partition beam 2126, which can be understood that a projection of the mounting structure 212 in a plane perpendicular to the thickness direction X of the end wall at least partially overlaps with a projection of the partition beam 2126 in a plane perpendicular to the thickness direction X of the end wall.

The partition beam 2126 is arranged in the box body 211, the partition beam 2126 is arranged on the end wall 2112, and when viewed in the thickness direction X of the end wall, the mounting structure 212 overlaps with the partition beam 2126, so that the partition beam 2126 can enhance the structural strength of a region of the end wall 2112 corresponding to the mounting structure 212, which reduces the risk of damage of the end wall 2112 due to overload.

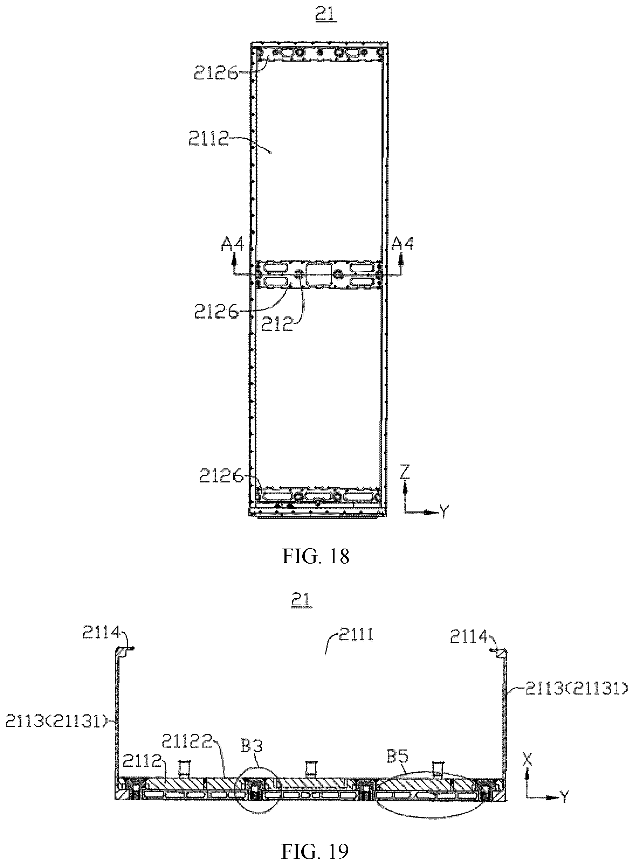

As shown in FIG. 18 and FIG. 19, in some embodiments, the mounting structure 212 includes a mounting member 213 installed on the end wall 2112, where one part of the mounting member 213 is embedded in the end wall 2112, and another part of the mounting member 213 is connected to the partition beam 2126.

The first installing hole 2123 on the end wall 2112 is a through hole penetrating the two sides of the end wall in the thickness direction X, and the mounting member 213 penetrates through the first installing hole 2123, so that the mounting member 213 penetrates through the end wall 2112 and is connected to the partition beam 2126. The mounting member 213 and the partition beam 2126 can be fixedly connected through, for example, bonding and welding. The mounting member 213 and the partition beam 2126 may alternatively be detachably connected through, for example, bolts and screws.

One part of the mounting member 213 is embedded in the end wall 2112, and another part of the mounting member 213 is connected to the partition beam 2126, so that the end wall 2112 and the mounting member 213 share space, which reduces the external space of the box body 211 occupied by the mounting member 213 or avoids the mounting member 213 occupying the external space of the box body 211, thereby reducing the overall structural size of the box 21. The mounting member 213 is connected to the end wall 2112 and the partition beam 2126, and when the mounting member 213 connects the box body 211 to the device, the end wall 2112 and the partition beam 2126 can jointly bear the weight of the box body 211 and its internal structure, which reduces the risk of fatigue damage of the end wall 2112.

In some embodiments, the mounting member 213 is welded to the partition beam 2126.

For the method of welding the mounting member 213 and the partition beam 2126, reference may be made to the method of welding the mounting member 213 and the end wall 2112. For example, the mounting member 213 and the partition beam 2126 may be welded through laser welding, ultrasonic welding, resistance welding, and gas welding.

The mounting member 213 and the partition beam 2126 are welded, which not only makes the connection easy, but also enables the connection between the mounting member 213 and the partition beam 2126 to be stronger and provide greater load-bearing capacity.

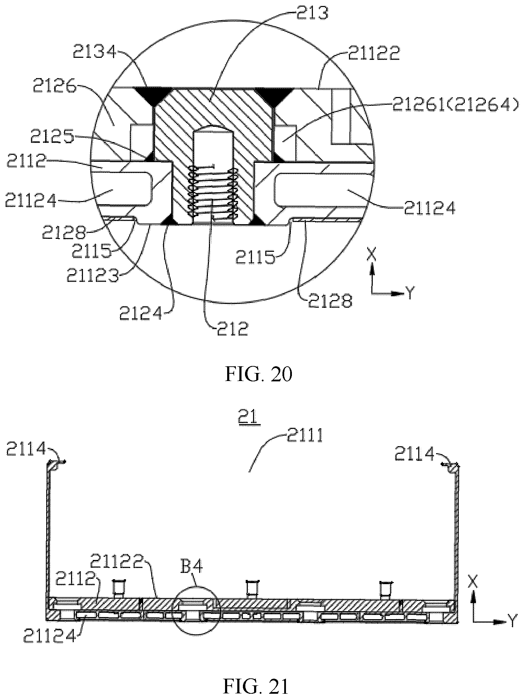

As shown in FIG. 20, in some embodiments, a third weld seam 2134 is formed between the mounting member 213 and the partition beam 2126, and the third weld seam 2134 is located on the side of the partition beam 2126 facing away from the end wall 2112.

The third weld seam 2134 is a welding mark formed by welding the mounting member 213 and the partition beam 2126.

The third weld seam 2134 may be in various forms. For example, the third weld seam 2134 may include a plurality of third welding marks, the plurality of third welding marks being spaced apart from each other around the periphery of the mounting member 213. In this way, the mounting member 213 is welded to the partition beam 2126 at a plurality of positions in the circumferential direction, which enhances the connection stability. For another example, the third weld seam 2134 is a closed-loop structure that extends in the circumferential direction of the mounting member 213 and is closed in the circumferential direction of the mounting member 213. In this way, the mounting member 213 is welded to the partition beam 2126 at any position in the circumferential direction of the mounting member 213, which not only connects the partition beam 2126 and the mounting member 213, but also acts as a seal, reducing the risk of impurities entering the gap between the partition beam 2126 and the mounting member 213.

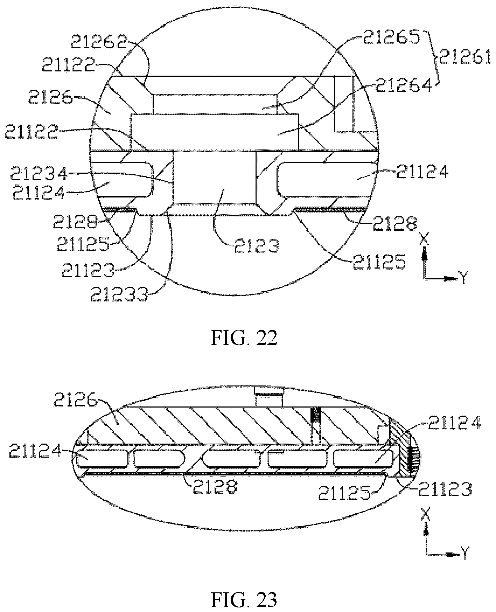

As shown in FIG. 21 and FIG. 22, the partition beam 2126 is provided with a second installing hole 21261, and one part of the partition beam 2126 is inserted into the second installing hole 21261. The second installing hole 21261 may alternatively be a through hole penetrating the two sides of the partition beam 2126 in the thickness direction X of the end wall. The mounting member 213 is inserted into the second installing hole 21261. The wall surface of the second installing hole 21261 includes a third tapered surface 21262 and a third cylindrical surface 21263. A large end of the third tapered surface 21262 is connected to the surface of the partition beam 2126 facing away from the end wall 2112 in the thickness direction X of the end wall, and a small end of the third tapered surface 21262 is connected to an end of the third cylindrical surface 21263. The third tapered surface 21262 is opposite part of the outer peripheral surface of the mounting member 213, and a third welding space is formed between the third tapered surface 21262 and the outer peripheral surface of the mounting member 213, and along the thickness direction X of the end wall, the third weld seam 2134 is at least partially located in the third welding space, which can reduce the size of the third weld seam 2134 protruding from the surface of the partition beam 2126 facing away from the end wall 2112 along the thickness direction X of the end wall or can prevent the third weld seam 2134 from protruding from the surface of the partition beam 2126 along the thickness direction X of the end wall. The part of the outer peripheral surface of the mounting member 213 opposite the third tapered surface 21262 may alternatively be a third tapered surface for welding, and a large end of the third tapered surface for welding is arranged close to the battery cell 10, so that a V-shaped third welding space is formed between the third tapered surface 21262 and the third tapered surface for welding. The third tapered surface 21262 may be a conical surface or a pyramid surface, and the third tapered surface for welding may be a conical surface or a pyramid surface.

The third weld seam 2134 formed by welding the mounting member 213 and the partition beam 2126 is located on the side of the partition beam 2126 facing away from the end wall 2112, so that the welding of the mounting member 213 and the partition beam 2126 can be carried out on the side of the partition beam 2126 facing away from the end wall 2112, which makes the welding of the mounting member 213 and the partition beam 2126 more convenient.

The second installing hole 21261 may be a blind hole that does not penetrate through a side of the partition beam 2126 facing away from the end wall 2112 in the thickness direction X of the end wall.

In the embodiment where the second weld seam 2125 is formed between the end wall 2112 and the mounting member 213 through welding, the second installing hole 21261 may alternatively be a stepped hole, and the second installing hole 21261 includes a third hole segment 21264 and a fourth hole segment 21265. Along the thickness direction X of the end wall, a projection of the fourth hole segment 21265 falls in the third hole segment 21264, and under the condition that both the fourth hole segment 21265 and the third hole segment 21264 are circular holes, the diameter of the third hole segment 21264 is larger than the diameter of the fourth hole segment 21265. The third hole segment 21264 is closer to the end wall 2112 than the fourth hole segment 21265. After the partition beam 2126 is installed in the box body 211, the second weld seam 2125 is accommodated in the third hole segment 21264, which avoids interference between the partition beam 2126 and the second weld seam 2125.

The mounting member 213 may be in various structures, for example, the mounting member 213 may be a hook clasp, a hook buckle, and the like. For another example, in some embodiments, the mounting member 213 is a sleeve with internal threads.

The wall of the mounting member 213 is welded to the end wall 2112. The mounting member 213 is a sleeve, and the sleeve is provided with internal threads, so that the mounting member 213 threadedly engage with the device to mount the box 21 on the electric device. Such mounting method is simple and convenient and provides good stability.

In some other embodiments, the mounting structure 212 may alternatively be another structure arranged on the mounting member 213. For example, the mounting structure 212 is an external thread arranged on the outer surface of the mounting member 213, so that the mounting member 213 is a screw. For another example, the mounting structure 212 is a hook arranged on the mounting member 213.

In some embodiments, the outer side of the end wall 2112 is provided with a protective structure 2128, where the protective structure 2128 is configured to buffering and/or insulate the end wall 2112.

The protective structure 2128 may be a buffer, such as rubber pad or foam. The protective structure 2128 may alternatively be an insulation board, such as rock wool board or extruded board. The protective structure 2128 may alternatively include both a cushion and an insulation board. The protective structure 2128 may be arranged on an outer structure of the end wall 2112 through bonding, welding, screwing, and bolting, or may be a coating formed on the outer side of the end wall 2112 through coating, such as nano thermal insulation coating, radiation thermal insulation coating, or barrier thermal insulation coating. The protective structure 2128 may also be made of a material with both thermal insulation function and cushioning function. The protective structure 2128 may alternatively be a composite structure including both a cushion and an insulation board.

The arrangement of the protective structure 2128 can improve the impact resistance of the end wall 2112 and/or help to maintain a substantially constant ambient temperature inside the box 21.

The protective structure 2128 may be arranged on the outer surface 21123 of the end wall. As shown in FIG. 23, an installation groove 21125 may be formed on the outer surface 21123 of the end wall, and the installation groove 21125 is recessed from the outer surface 21123 of the end wall to the interior of the box 21 along the thickness direction X of the end wall. The protective structure 2128 is arranged in the installation groove 21125 and connected to the bottom surface of the installation groove 21125, where the bottom surface of the installation groove 21125 is a surface of the installation groove 21125 perpendicular to the thickness direction X of the end wall. Along the thickness direction X of the end wall, recessed depth of the installation groove 21125 may be greater than, less than, or equal to the size of the protective structure 2128 along the thickness direction X of the end wall. FIG. 23 shows that the recessed depth of the installation groove 21125 is greater than the size of the protective structure 2128 along the thickness direction X of the end wall, so as to avoid the protective structure 2128 extending beyond the installation groove 21125 and in turn affecting the connection between the mounting structure 212 and the device.

In some embodiments, the mounting structure 212 protrudes from the protective structure 2128.

Along the thickness direction X of the end wall, the mounting structure 212 protrudes from the surface of the protective structure 2128 facing away from the end wall 2112. In the embodiment where the mounting structure 212 is directly arranged on the end wall 2112, the mounting hole 2121 is arranged on the outer surface 21123 of the end wall, and the protective structure 2128 is arranged in the installation groove 21125. Along the thickness direction X of the end wall, the size of the protective structure 2128 is smaller than the depth of the installation groove 21125, so that the outer surface 21123 of the end wall provided with the mounting hole 2121 protrudes from the protective structure 2128, and the mounting structure 212 protrudes from the protective structure 2128.

In the embodiment where the mounting structure 212 is arranged on the mounting member 213, the mounting member 213 may be arranged at any position of the end wall 2112, provided that an end of the mounting member 213 facing away from the battery cell 10 is farther away from the interior of the battery cell 10 than a surface of the protective structure 2128 facing away from the end wall 2112, in other words, the mounting member 213 protrudes from the protective structure 2128, so that the mounting structure 212 protrudes from the protective structure 2128 (shown in FIG. 20).

The mounting structure 212 protrudes from the protective structure 2128, which facilitates the engagement between the mounting structure 212 and the device and reduces the risk of interference between the connecting position of the mounting structure 212 and the device and the protective structure 2128.

The structure of the end wall 2112 can not only be a solid plate-like structure.

As shown in FIG. 23, in some embodiments, a flow channel 21124 for accommodating a heat exchange medium is formed inside the end wall 2112. The end wall 2112 may be a plate-like structure with a flow channel 21124 for accommodating a heat exchange medium, where the heat exchange medium may be water, air, mixed liquid of water and ethylene glycol, refrigerant, phase change material, or the like, and the heat exchange medium may flow circularly. The end plate may also be called water cooling plate, liquid cooling plate, heat exchange plate, temperature regulating plate, or the like.

The flow channel 21124 formed inside the end wall 2112 can accommodate the heat exchange medium, so that the end wall 2112 can play a role in adjusting the temperature of the internal structure of the box body 211, and there is no need to arrange a thermal management component in the box body 211, which improves the utilization of space inside the battery 100 equipped with such box 21 and is conducive to increasing the energy density of the battery 100 equipped with such box 21.

In the embodiment where the mounting structure 212 includes the mounting member 213, when viewed in the thickness direction X of the end wall, the mounting member 213 does not overlap with the flow channel 21124.

It can be understood that the mounting member 213 is arranged to avoid the flow channel 21124, and the heat transfer medium in the flow channel 21124 does not come into contact with the mounting member 213.

The mounting member 213 does not overlap with the flow channel 21124, and the mounting member 213 and the flow channel 21124 portion do not interfere with each other, which can avoid the heat exchange medium in the flow channel 21124 reducing the service life of the mounting member 213, and can also prevent the mounting member 213 from affecting the flow of the heat exchange medium in the flow channel 21124 and reducing the heat exchange efficiency.

Certainly, in some other embodiments, along the thickness direction X of the end wall, the mounting member 213 may alternatively pass through the flow channel 21124, so that part of the mounting member 213 is located in the flow channel 21124, and the mounting member 213 comes into contact the heat exchange medium in the flow channel 21124.

In some embodiments, the end wall 2112 is provided with an inlet 2129 for the heat exchange medium to flow into the flow channel 21124 and an outlet 2130 for the heat exchange medium in the flow channel 21124 to flow out.

The heat exchange medium enters the flow channel 21124 from the inlet 2129, and flows toward the outlet 2130 along the extending direction of the flow channel 21124. During the flow, heat exchange occurs and the heat exchange medium is discharged from the outlet 2130. This process can adjust the temperature inside the box body 211, which can be to raise the temperature inside the box body 211 or to lower the temperature inside the box body 211.

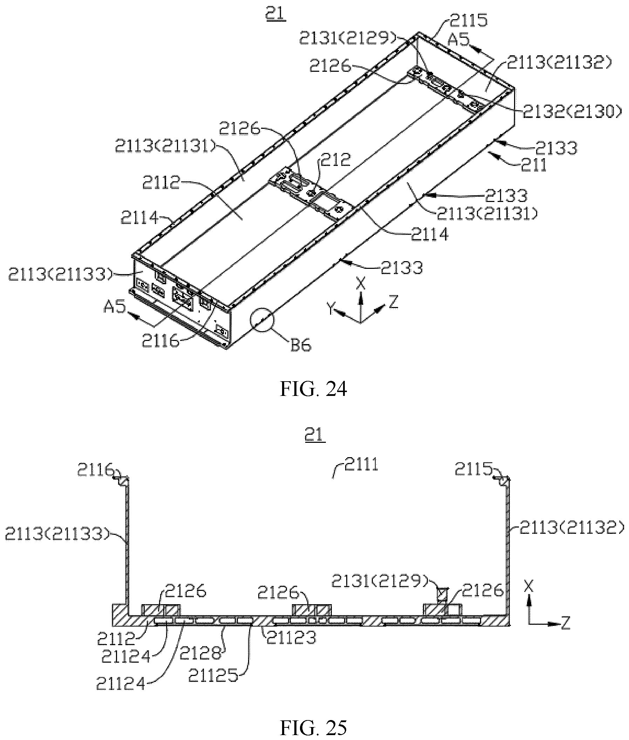

As shown in FIG. 24, in this embodiment, the box 21 further includes a first pipe 2131 and a second pipe 2132, where the first pipe 2131 and the second pipe 2132 both communicate with the flow channel 21124. Both the first pipe 2131 and the second pipe 2132 are both located in the box body 211. The inlet 2129 is arranged in the first pipe 2131 and the outlet 2130 is arranged in the second pipe 2132. In the embodiment where the box 21 includes a partition beam 2126, the first pipe 2131 and the second pipe 2132 both pass through the partition beam 2126 in a direction facing away from the end wall 2112. The first pipe 2131 and the second pipe 2132 may pass through the same partition beam 2126, or may pass through different partition beams 2126 respectively.

The end wall 2112 is provided with the inlet 2129 and the outlet 2130 of the heat exchange medium, so that the heat exchange medium can flow in the flow channel 21124, which can make heat exchange faster, thereby improving the heat exchange efficiency.

The end wall 2112 may be provided with one flow channel 21124 or may be provided with a plurality of flow channels 21124. In the embodiment where the end wall 2112 is provided with one flow channel 21124, the end wall 2112 may be provided with only one inlet 2129 and one outlet 2130. In the embodiment where the end wall 2112 is provided with a plurality of flow channels 21124, the extending directions of the flow channels 21124 may be the same or different, and the flow channels 21124 may be independent of each other or connected in parallel. The parallel connection of the plurality of flow channels 21124 means that the heat exchange medium entering the plurality of flow channels 21124 from one inlet 2129 can be distributed to each flow channel 21124, and the heat exchange medium discharged from each flow channel 21124 can be gathered at the same outlet 2130 for discharge.

In the embodiment where the end wall 2112 is provided with a plurality of flow channels 21124, one flow channel 21124 may be correspondingly provided with one inlet 2129 and one outlet 2130, or all the flow channels 21124 may share one inlet 2129 and one outlet 2130.

In some other embodiments, the end wall 2112 is provided with a plurality of outlets 2130.

The plurality of outlets 2130 are spaced apart from each other on the end wall 2112. The box body 211 may include a plurality of second pipes 2132, where the plurality of second pipes 2132 are spaced apart from each other, and each second pipe 2132 is provided with one outlet 2130. As shown in FIG. 24, the plurality of second pipes 2132 pass through the same partition beam 2126. The plurality of second pipes 2132 are spaced apart from each other along the extending direction of the partition beam 2126.

All of the heat exchange medium in the flow channel 21124 can flow from the plurality of outlets 2130. In the embodiment where the end wall 2112 has a plurality of outlets 2130, the end wall 2112 may be provided with one inlet 2129 or may be provided with a plurality of inlets 2129. In some other embodiments, the number of inlets 2129 may be in a one-to-one correspondence with the number of outlets 2130.

The end wall 2112 is provided with a plurality of outlets 2130, which is conducive to quickly discharging the heat exchange medium from the flow channel 21124, and when the heat exchange medium is a cooling medium, the heat inside the box 21 can be quickly taken away, thereby rapidly reducing the temperature inside the box 21.

As shown in FIG. 24, in some embodiments, the box 21 includes a plurality of mounting structures 212, the plurality of mounting structures 212 being spaced apart from each other.

All of the mounting structures 212 in the plurality of mounting structures 212 may be the same or may be different. For example, each mounting structure 212 may include only a mounting hole 2121 provided on the end wall 2112, or each mounting structure 212 may be provided on a mounting hole 2121 on one mounting member 213, so that all of the mounting structures 212 are the same. For another example, some mounting structures 212 in the plurality of mounting structures 212 may be mounting holes 2121 arranged on the end wall 2112, and other mounting structures 212 may be mounting holes 2121 arranged on the mounting member 213, so that the mounting structures 212 are different.

The box 21 includes a plurality of mounting structures 212 spaced apart from each other, where the plurality of mounting positions can be formed between the box body 211 and the device, which not only makes the connection between the box body 211 and the electric device more stable, but also can reduce the load borne by each mounting position.

As shown in FIG. 19, in some embodiments, the box body 211 further includes a side wall 2113, where the side wall 2113 surrounds an outer periphery of the end wall 2112, along a first direction Y, the side wall 2113 includes two oppositely arranged first side walls 21131, and the mounting member 213 does not extend beyond the outer side face of the first side wall 21131.

The side wall 2113 surrounds the outer side of the end wall 2112, and can form a frame structure matching the outer contour of the end wall 2112. Along the thickness direction X of the end wall, one end of the side wall 2113 is connected to the end wall 2112, and another end forms an opening 2111 of the box body 211. The side wall 2113 may be an integrally formed structure surrounding the periphery of the end wall 2112, or may be a frame structure formed by connecting a plurality of plate-like structures in sequence along an edge of the end wall 2112. One end of the side wall 2113 may be directly or indirectly connected to an outer edge of the end wall 2112, for example, the side wall 2113 and the end wall 2112 are indirectly connected through glue. Certainly, the side wall 2113 and the end wall 2112 may alternatively be integrally formed.

The end wall 2112 and the side wall 2113 have different structural shapes, and the resulting box body 211 also has different structural shapes. For example, if the end wall 2112 is a rectangular plate and the side wall 2113 is a rectangular frame structure, the box body 211 is a rectangular structure; and if the end wall 2112 is a rectangular plate, the side wall 2113 includes only two first walls oppositely arranged along the first direction Y, and the two first walls are respectively connected to the two ends of the end wall 2112 along the first direction Y, the box body 211 has a U-shaped structure.

The first direction y is any direction perpendicular to the thickness direction X of the end wall. The outer side face of the first side wall 21131 refers to a surface where the two first side walls 21131 face away from each other in the first direction Y. The side direction of the box body 211 in the embodiments of this application is any direction perpendicular to the thickness direction X of the end wall, and the first direction Y is one of side directions of the box body 211. When the battery 100 equipped with the box 21 is installed on the vehicle 1000, the first direction Y may be parallel to a width direction of the vehicle 1000.

The mounting member 213 does not exceed beyond the outer side face of the first side wall 21131, and therefore along the first direction Y, the mounting member 213 does not extend to the side direction of the box body 211, and the mounting member 213 does not occupy the space of the box body 211 outside the first side wall 21131. Thus, the size of the internal space of the box body 211 along the first direction Y can be increased so that the space of the box body 211 originally occupied by the mounting member 213 on the first direction Y can be used for accommodating battery cells 10, which is conducive to increasing the energy density and pack assembly efficiency of batteries 100 equipped with such box 21.

In some embodiments, the box 21 includes a first flange portion 2114, where the first flange portion 2114 is arranged at an end of the first side wall 21131 far away from the end wall 2112, and the first flange portion 2114 at least partially protrudes from the inner side face of the side wall 2113.

Along the thickness direction X of the end wall, the first flange portion 2114 is connected to an end of the side wall 2113 facing away from the end wall 2112. Along the thickness direction X of the end wall, the surface of the first flange portion 2114 facing away from the end wall 2112 is formed with a connecting surface and a sealing surface that engage with the cover 22.

The inner side face of the side wall 2113 refers to a surface of the side wall 2113 facing the interior of the box body 211. The inner side face of the first side wall 21131 refers to a surface of the first side wall 21131 facing another first side wall 21131, and the inner side face of the first side wall 21131 is at least part of the inner side face of the side wall 2113.

Along the first direction Y, the first flange portion 2114 may all protrude from the inner side face of the side wall 2113, that is, the first flange portion 2114 protrudes from the inner side face of the side wall 2113 to the interior of the box body 211 along the first direction Y. As shown in FIG. 21, the first flange portion 2114 wholly protrudes from the inner side face of the side wall 2113. Specifically, the two first side walls 21131 each are provided with the first flange portion 2114, and the first flange portion 2114 wholly protrudes from the inner side face of the corresponding first side wall 21131.

In some other embodiments, only one part of the first flange portion 2114 may protrude from the inner surface of the side wall 2113, and another part of the first flange portion 2114 may protrude from an outer side face of the side wall 2113.

Compared with the situation that the first flange portion 2114 wholly protrudes from the outer side face of the side wall 2113, the first flange portion 2114 at least partially protrudes from the inner side face of the side wall 2113, so that the box body 211 and the first flange portion 2114 share part of space, which can reduce the external space occupied by the first flange portion 2114 along the side direction of the box body 211. Thus, the size of the internal space of the box body 211 along the side direction of the box body 211 can be increased so that the space of the box body 211 originally occupied by the mounting member 213 on the side direction of the box body 211 can be used for accommodating battery cells 10, which is conducive to increasing the energy density and pack assembly efficiency of batteries 100 equipped with such box 21.

As shown in FIG. 25, in some embodiments, the side wall 2113 further includes a second side wall 21132 and a third side wall 21133 oppositely arranged along the second direction Z. The box 21 includes a second flange portion 2115 and a third flange portion 2116. The second flange portion 2115 is arranged at an end of the second side wall 21132 far away from the end wall 2112 and at least partially protrudes from an inner side face of the second side wall 21132. The third flange portion 2116 is arranged at an end of the third side wall 21133 far away from the end wall 2112 and at least partially protrudes from an outer side face of the second side wall 21132. The first direction Y, the second direction Z, and the thickness direction X of the end wall are perpendicular to each other.

The second direction Z is one of the side directions of the box body 211.

Along the thickness direction X of the end wall, the second flange portion 2115 is connected to an end of the second side wall 21132 facing away from the end wall 2112. Along the thickness direction X of the end wall, the surface of the second flange portion 2115 facing away from the end wall 2112 is formed with a connecting surface and a sealing surface that engage with the cover 22.

The inner side face of the second side wall 21132 refers to a surface of the second side wall 21132 facing the interior of the box body 211. The inner side face of the second side wall 2113 is part of the inner side face of the side wall 2113. Along the second direction Z, the second flange portion 2115 may all protrude from the inner side face of the second side wall 21132, that is, the second flange portion 2115 protrudes from the inner side face of the second side wall 21132 to the interior of the box body 211 along the second direction Z. As shown in FIG. 25, the second flange portion 2115 wholly protrudes from the inner side face of the second side wall 21132.

In some other embodiments, only one part of the second flange portion 2115 may protrude from the inner surface of the second side wall 21132, and another part of the second flange portion 2115 may protrude from the outer side face of the second side wall 21132.

The outer side face of the third side wall 21133 refers to a surface of the third side wall 21133 facing away from the interior of the box body 211. Along the second direction Z, the third flange portion 2116 may all protrude from an outer side face of the third side wall 21133, that is, the third flange portion 2116 protrudes from the outer side face of the third side wall 21133 to the exterior of the box body 211 along the second direction Z. As shown in FIG. 25, the third flange portion 2116 wholly protrudes from the outer side face of the third side wall 21133.

In some other embodiments, only one part of the third flange portion 2116 may protrude from the outer side face of the third side wall 21133, and another part of the third flange portion 2116 may protrude from an inner side face of the third side wall 21133.

Other structures such as the total positive electrode and total negative electrode of the battery 100, a water cooling inlet, a water cooling outlet 2130, and an interface of a circuit board are provided on the outer side of the battery 100 equipped with the box 21 along the second direction Z, and occupy the space outside the box body 211 along the second direction Z. Therefore, the third flange portion 2116 protrudes toward the outside of the box body 211 along the second direction Z, and can share a certain space with other structures arranged on the outer side of the box body 211 along the second direction Z, which not greatly affects the overall size of the box 21, also makes the opening 2111 of the box body 211 larger, and is convenient for the battery cells 10 to be put into the box.

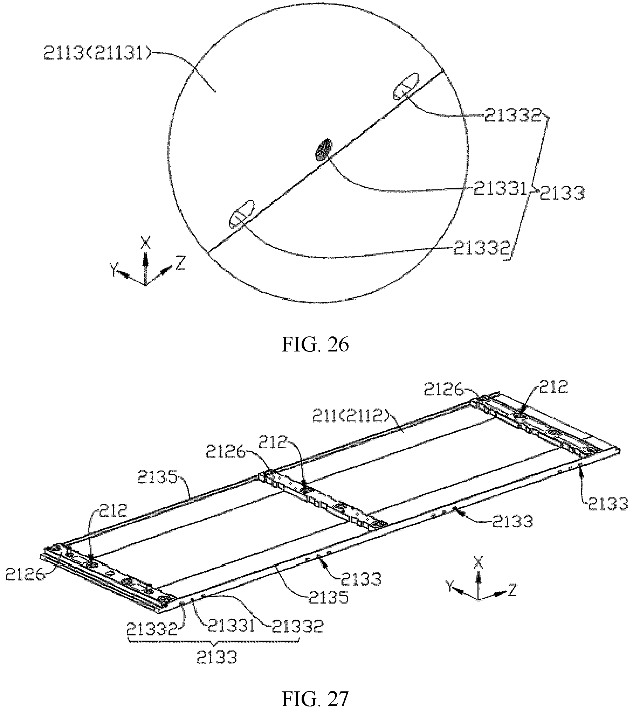

As shown in FIG. 26, in some embodiments, the box body 211 further includes a side wall 2113, where the side wall 2113 surrounds an outer periphery of the end wall 2112, the side wall 2113 is provided with a hoisting structure 2133, and the hoisting structure 2133 is configured to engage with hoisting gear to move the box 21.

The hoisting structure 2133 may be arranged at any part of the side wall 2113. In this embodiment, the hoisting structure 2133 is arranged on the first side wall 21131, one of the two first side walls 21131 is provided with the hoisting structure 2133, or the two first side walls 21131 each are provided with the hoisting structure 2133.

The hoisting structure 2133 is a structure arranged on the side wall 2113 of the box body 211 that can be configured to engage with the hoisting gear. After the hoisting gear is engaged with the hoisting structure 2133, the hoisting gear can drive the box 21 to move. Therefore, the arrangement of the hoisting structure 2133 facilitates the assembly and transport of the box 21.

The hoisting structure 2133 may be in various structures. For example, the hoisting structure 2133 may be a hook, and the hoisting structure 2133 in the form of a hook engage with hoisting gear in the form of a hook, so that the hoisting gear can move the box 21. For another example, in some embodiments, the hoisting structure 2133 includes a first hoisting hole 21331, the first hoisting hole 21331 being configured to engage with the hoisting gear to lock the hoisting gear to the box body 211.

The first hoisting hole 21331 can be a circular hole, a square hole, a rectangular hole, a strip hole, or the like, and this application does not limit it. The first hoisting hole 21331 may be a blind hole or may be a through hole penetrating the side wall 2113.

The hoisting structure 2133 includes the first hoisting hole 21331, and the first hoisting hole 21331 engages with the hoisting gear to lock the hoisting gear to the box body 211, which is conducive to moving the box 21 through engagement of the box 21 and the hoisting gear. Compared with the situation that a hoisting member protruding from the outer side face of the side wall 2113 is installed on the side wall 2113, arranging the first hoisting hole 21331 on the side wall 2113 can avoid occupying the external space of the box 21 in the side direction. Thus, the size of the internal space of the box body 211 along the side direction of the box body 211 can be increased so that the space of the box body 211 originally occupied by the mounting member 213 on the side direction of the box body 211 can be used for accommodating battery cells 10, which is conducive to increasing the energy density and pack assembly efficiency of batteries 100 equipped with such box 21.

In some embodiments, the hoisting structure 2133 includes a second hoisting hole 21332, the second hoisting hole 21332 being configured for positional engagement with the hoisting gear.

The structure of the second hoisting hole 21332 may be the same as or different from that of the first hoisting hole 21331. The second hoisting hole 21332 is configured to engage with the positioning structure on the hoisting gear. The positioning structure of the hoisting gear varies with the structural shape of the second hoisting hole 21332. For example, the second hoisting structure 2133 is a circular, square, rectangular, or strip hole, and the positioning structure of the hoisting gear may be a positioning pin.

The arrangement of the second hoisting hole 21332 can keep the hoisting gear and the box 21 in relatively accurate positions before the hoisting gear is engaged with the first hoisting hole 21331, so that the hoisting gear can accurately engage with the first hoisting hole 21331 to lock the hoisting gear to the box body 211.

In some embodiments, the hoisting structure 2133 includes two second hoisting holes 21332, where the two second hoisting holes 21332 are respectively located at the two sides of the first hoisting hole 21331.

In this embodiment, the two second hoisting holes 21332 are located on the two sides of the first hoisting hole 21331 along the second direction Z, where the thickness direction X, the first direction Y, and the second direction Z of the end wall are perpendicular to each other. When the battery 100 equipped with the box 21 is installed on the vehicle 1000, the second direction Z is parallel to a running direction of the vehicle 1000.

The second hoisting holes 21332 are respectively arranged on the two sides of the first hoisting hole 21331, which can further accurately position the hoisting gear and the first hoisting hole 21331, so that the hoisting gear can be accurately locked to the box body 211 at the first hoisting hole 21331.

Certainly, in other embodiments, the hoisting structure 2133 may alternatively include one second hoisting hole 21332 or may include three or more than three second hoisting holes 21332.

In some embodiments, the first hoisting hole 21331 is a threaded hole; and/or the second hoisting hole 21332 is a waist-shaped hole. If the first hoisting hole 21331 is a threaded hole, the box body 211 and the hoisting gear can be locked by the threaded engagement of the hoisting gear and the first hoisting hole 21331. Such locking method is simple and convenient, and can improve the hoisting operation efficiency. If the second hoisting hole 21332 is a waist-shaped hole, after the hoisting gear comes into positional engagement with the second hoisting hole 21332, the risk that the hoisting gear rotates in the second hoisting hole 21332 is relatively small, which can enhance the positioning stability.

Certainly, in other embodiments, the first hoisting hole 21331 and the second hoisting hole 21332 may alternatively be in other structural forms.

In some embodiments, the side wall 2113 is provided with a plurality of hoisting structures 2133, the plurality of hoisting structures 2133 being spaced apart from each other.

In this embodiment, each first side wall 21131 may be provided with a plurality of hoisting structures 2133, the plurality of hoisting structures 2133 being spaced apart from each other along the second direction Z.

The side wall 2113 is provided with a plurality of hoisting structures 2133 spaced apart from each other, and the hoisting gear can engage with the plurality of hoisting structures 2133, or the plurality of hoisting gears can engage with the plurality of hoisting structures 2133 to move the box 21, which can enhance the stability of hoisting operations.

An embodiment of this application further provides a box assembly 20, where the box assembly 20 includes a cover 22 and the box 21 according to any one of the foregoing embodiments, and the cover 22 is configured to cover the opening 2111.

The mounting member 213 of the box 21 according to any one of the foregoing embodiments occupies little or no external space in the side direction of the box body 211, so the box assembly 20 equipped with such box 21 can provide, by increasing the size of the internal space of the box body 211 along the side direction of the box body 211, the space of the box body 211 originally occupied by the mounting member 213 on the side direction of the box body 211 for accommodating battery cells 10, which is conducive to increasing the energy density and pack assembly efficiency of batteries 100 equipped with such box assembly 20.

As shown in FIG. 27, in some embodiments, the box body 211 may not be provided with a side wall 2113, and the box body 211 includes only the end wall 2112. Along the thickness direction X of the end wall, a battery cell 10 (not shown in FIG. 27) may be arranged on a side of the end wall 2112, and the end wall 2112 may bear the weight of the battery cell 10. The opening 2111 of the box body 211 may allow the battery cell 10 to be placed on any side of the end wall 2112, for example, in a space on the opposite side of the end wall 2112 along the thickness direction X of the end wall.

In the embodiment where the box 21 includes a partition beam 2126, the partition beam 2126 is arranged on a side of the end wall 2112 where the battery cell 10 is arranged, and the mounting structure 212 can penetrate through the partition beam 2126 along the thickness direction X of the end wall.

In the embodiment where the box 21 includes a hoisting structure 2133, each of the two opposite side faces of the end wall 2112 along the first direction Y may be provided with the hoisting structure 2133, or either of the two side faces of the end wall 2112 along the first direction Y may be provided with a plurality of hoisting structures 2133 spaced apart from each other along the second direction.

Still referring to FIG. 27, along the first direction Y, two blocking portions 2135 may also be respectively arranged on the two sides of the end wall 2112. The blocking portions 2135 extend in the second direction Z and protrude from a surface of the end wall 2112 provided with the partition beam 2126 along the thickness direction X of the end wall. In other words, the blocking portions 2135 protrude from a surface of the end wall 2112 facing the battery cell 10 along the thickness direction X of the end wall. The blocking portion 2135 is configured to block the glue on the surface of the end wall 2112 from overflowing, where the glue includes but is not limited to a glue that bonds the battery cell 10 and the end wall 2112, a glue that bonds the partition beam 2126 and the end wall 2112, and the like.

An embodiment of this application further provides a battery 100, where the battery 100 includes a battery cell 10 and the box assembly 20 according to the foregoing embodiments, and the battery cell 10 is accommodated in the box body 211.

The internal space of the box assembly 20 according to the foregoing embodiments can accommodate more battery cells 10, and batteries 100 equipped with such box assembly 20 can have relatively high energy density and pack assembly efficiency.

An embodiment of this application further provides an electric device including the battery 100 according to the foregoing embodiments.

An embodiment of this application provides a box 21, where the box 21 includes a box body 211 and a mounting member 213, the box body 211 includes an end wall 2112 and a side wall 2113, and the side wall 2113 surrounds an outer periphery of the end wall 2112. The mounting member 213 is a sleeve provided on the end wall 2112, and the sleeve has internal threads. The side wall 2113 includes two first side walls 21131 oppositely arranged along a first direction Y, and a second side wall 21132 and a third side wall 21133 oppositely arranged along a second direction Z. The mounting member 213 does not extend beyond an outer side face of the first side wall 21131 of the side wall 2113 in the first direction Y. An end of the first side wall 21131 facing away from the end wall 2112 is connected to a first flange portion 2114, and the first flange portion 2114 wholly protrudes from an inner side face of the first side wall 21131. An end of the second side wall 21132 facing away from the end wall 2112 is connected to a second flange portion 2115, and the second flange portion 2115 wholly protrudes from an inner side face of the second side wall 21132. An end of the third side wall 21133 facing away from the end wall 2112 is connected to a third flange portion 2116, and the third flange portion 2116 wholly protrudes from an outer side face of the third side wall 21133. An outer surface 21123 of the end wall is provided with an installation groove 21125, a protective structure 2128 is arranged in the installation groove 21125, and the protective structure 2128 does not extend beyond the groove. The first side wall 21131 is provided with a hoisting structure 2133, where the hoisting structure 2133 includes a first hoisting hole 21331 and two second hoisting holes 21332 located at two sides of the first hoisting hole 21331. The first hoisting hole 21331 is a threaded hole, and the second hoisting holes 21332 are waist-shaped holes.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A box, comprising:
a box body having an opening and an end wall arranged oppositely; and
a mounting structure arranged on the end wall, wherein when viewed in a thickness direction of the end wall, the mounting structure overlaps with the end wall, and the mounting structure is configured to connect the box body and a device.

2. The box according to claim 1, wherein the mounting structure comprises a mounting hole.

3. The box according to claim 2, wherein the mounting hole is provided with internal threads.

4. The box according to claim 2 or 3, wherein the mounting hole is a blind hole.

5. The box according to any one of claims 1 to 4, wherein the box further comprises a mounting member installed on the end wall, and the mounting structure is placed on the mounting member.

6. The box according to claim 5, wherein the mounting member is welded to the end wall.

7. The box according to claim 6, wherein a first weld seam is formed between the mounting member and the end wall, and the first weld seam is located on an outer side face of the end wall.

8. The box according to claim 7, wherein a second weld seam is formed between the mounting member and the end wall, and the second weld seam is located on an inner side face of the end wall.

9. The box according to any one of claims 5 to 8, wherein the mounting member is at least partially embedded in the end wall.

10. The box according to claim 9, wherein one end of the mounting member is flush with the outer surface of the end wall; and/or one end of the mounting member protrudes from the outer surface of the end wall.

11. The box according to any one of claims 1 to 10, wherein the box further comprises a partition beam, wherein the partition beam is located in the box body and arranged on the end wall, and when viewed in the thickness direction of the end wall, the mounting structure overlaps with the partition beam.

12. The box according to claim 11, wherein the mounting structure comprises a mounting member installed on the end wall, wherein one part of the mounting member is embedded in the end wall, and another part of the mounting member is connected to the partition beam.

13. The box according to claim 12, wherein the mounting member is welded to the partition beam.

14. The box according to claim 13, wherein a third weld seam is formed between the mounting member and the partition beam, and the third weld seam is located on a side of the partition beam facing away from the end wall.

15. The box according to any one of claims 5 to 10, wherein the mounting member is a sleeve, and the sleeve is provided with internal threads.

16. The box according to any one of claims 1 to 15, wherein a protective structure is provided on the outer side of the end wall, and the protective structure is configured to provide cushioning and/or insulation for the end wall.

17. The box according to claim 16, wherein the mounting structure protrudes from the protective structure.

18. The box according to any one of claims 1 to 17, wherein a flow channel for accommodating a heat exchange medium is formed inside the end wall.

19. The box according to claim 18, wherein when viewed in the thickness direction of the end wall, the mounting structure does not overlap with the flow channel.

20. The box according to claim 18 or 19, wherein the end wall is provided with an inlet for the heat exchange medium to flow into the flow channel and an outlet for the heat exchange medium in the flow channel to flow out.

21. The box according to claim 20, wherein the end wall is provided with a plurality of such outlets.

22. The box according to any one of claims 1 to 21, wherein the box comprises a plurality of such mounting structures, the plurality of mounting structures being spaced apart from each other.

23. The box according to any one of claims 1 to 22, wherein the box body further comprises a side wall, the side wall surrounds an outer periphery of the end wall, and in a first direction, the side wall comprises two opposite first side walls, and the mounting member does not exceed beyond an outer side face of the first side wall.

24. The box according to claim 23, wherein the box comprises a first flange portion, the first flange portion is arranged at one end of the first side wall away from the end wall, and the first flange portion at least partially protrudes from an inner side face of the first side wall.

25. The box according to any one of claims 1 to 24, wherein the box body further comprises a side wall, the side wall surrounds an outer periphery of the end wall, the side wall is provided with a hoisting structure, and the hoisting structure is configured to engage with hoisting gear to move the box.

26. The box according to claim 25, wherein the hoisting structure comprises a first hoisting hole, the first hoisting hole being configured to engage with the hoisting gear to lock the hoisting gear to the box body.

27. The box according to claim 26, wherein the hoisting structure comprises a second hoisting hole, the second hoisting hole being configured for positional engagement with the hoisting gear.

28. The box according to claim 27, wherein the hoisting structure comprises two second hoisting holes, the two second hoisting holes being respectively located at two sides of the first hoisting hole.

29. The box according to claim 27 or 28, wherein the first hoisting hole is a threaded hole; and/or the second hoisting hole is a waist-shaped hole.

30. The box according to claim 29, wherein the side wall is provided with a plurality of such hoisting structures, the plurality of hoisting structures being spaced apart from each other.

31. A box assembly, comprising:
the box according to any one of claims 1 to 30; and
a cover, wherein the cover is configured to cover the opening.

32. A battery, comprising:
the box assembly according to claim 31; and
a battery cell accommodated in the box body.

33. An electric device, comprising the battery according to claim 32.
